(19) **Europäisches Patentamt / European Patent Office / Office européen des brevets**

(11) **EP 4 779 899 A1**

(12) **EUROPEAN PATENT APPLICATION**
published in accordance with Art. 153(4) EPC

(43) Date of publication:
**22.07.2026 Bulletin 2026/30**

(21) Application number: **24870239.1**

(22) Date of filing: **22.08.2024**

(51) International Patent Classification (IPC):
**H04B 7/185** (2006.01)

(52) Cooperative Patent Classification (CPC):
**H04B 7/185; H04B 17/382; H04W 72/0453**

(86) International application number:
**PCT/CN2024/114055**

(87) International publication number:
**WO 2025/066693 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311283570**

(71) Applicant: **HUAWEI TECHNOLOGIES CO., LTD.**
**Shenzhen 518129 (CN)**

(72) Inventors:
• **YANG, Liu**
  **Shenzhen, Guangdong 518129 (CN)**
• **ZHANG, Xiaoyu**
  **Shenzhen, Guangdong 518129 (CN)**
• **LIAO, Shuri**
  **Shenzhen, Guangdong 518129 (CN)**
• **YU, Tong**
  **Shenzhen, Guangdong 518129 (CN)**
• **DOU, Shengyue**
  **Shenzhen, Guangdong 518129 (CN)**

(74) Representative: **Isarpatent**
**Patent- und Rechtsanwälte Part G mbB**
**Friedrichstrasse 31**
**80801 München (DE)**

(54) **FREQUENCY SPECTRUM RESOURCE DETERMINATION METHOD, APPARATUS, AND SYSTEM, AND STORAGE MEDIUM**

(57) A spectrum resource determining method, apparatus, and system, and a storage medium are provided. A server configures at least one of a first spectrum resource, a second spectrum resource that corresponds to a first network and that is in the first spectrum resource, a third spectrum resource that corresponds to a second network and that is in the first spectrum resource, a spectrum boundary between the second spectrum resource and the third spectrum resource, a minimum Doppler shift, and a maximum Doppler shift, so that the second network can accurately determine, based on the configuration, a spectrum boundary corresponding to the second network. In this way, a guard band is configured, so that spectrum overlapping caused by a Doppler shift can be avoided, thereby avoiding interference between the first network and the second network.

FIG. 8

**Description**

This application claims priority to Chinese Patent Application No. 202311283570.1, filed with the China National Intellectual Property Administration on September 28, 2023 and entitled "SPECTRUM RESOURCE DETERMINING METHOD, APPARATUS, AND SYSTEM, AND STORAGE MEDIUM", which is incorporated herein by reference in its entirety.

**TECHNICAL FIELD**

This application relates to the field of communication technologies, and in particular, to a spectrum resource determining method, apparatus, and system, and a storage medium.

**BACKGROUND**

With booming development of low earth orbit (low earth orbit, LEO) satellite communication, spectrum resources are rapidly occupied and become scarce gradually. To expand a bandwidth, LEO satellite communication attempts to seek co-construction and sharing on spectrum resources of international mobile telecommunications (international mobile telecommunications, IMT) or a geostationary earth orbit (geostationary earth orbit, GEO). Spectrum co-construction and sharing can improve resource utilization and reduce construction costs. However, a problem of co-channel/adjacent-channel interference between a non-terrestrial communication network (non-terrestrial network, NTN) (which is also referred to as a satellite network) and a terrestrial network (terrestrial network, TN) needs to be resolved.

Spectrum sharing between existing long term evolution (long term evolution, LTE) and existing new radio (new radio, NR) can be implemented by using a long term evolution-new radio (LTE-NR, LNR) mechanism. However, the LNR requires that an LTE cell and an NR cell that participate in spectrum sharing meet a requirement of complete alignment of radio frames and subframes. If the subframes are not aligned, spectrum overlapping occurs, resulting in mutual interference. However, in a satellite-terrestrial scenario, it is difficult to implement and maintain frame-level synchronization between a satellite and a large quantity of terrestrial base stations. Therefore, the LNR mechanism is not applicable to a satellite-terrestrial spectrum sharing scenario.

In addition, in a current satellite-terrestrial dynamic spectrum sharing solution, details for avoiding mutual interference between the TN and the NTN are not provided.

**SUMMARY**

This application provides a spectrum resource determining method, apparatus, and system, and a storage medium, so that when a first network and a second network share a spectrum resource, a guard band in the spectrum resource is configured, thereby avoiding interference between the first network and the second network.

According to a first aspect, a spectrum resource determining method is provided. The method is implemented by a second network or a chip or a circuit used in the second network.

The method includes: receiving first configuration information, where the first configuration information includes at least one of the following: a first spectrum resource, a second spectrum resource that corresponds to a first network and that is in the first spectrum resource, a third spectrum resource that corresponds to a second network and that is in the first spectrum resource, a spectrum boundary between the second spectrum resource and the third spectrum resource, a minimum Doppler shift, and a maximum Doppler shift; and determining a spectrum boundary corresponding to the second network, where if a center frequency of the third spectrum resource is higher than a center frequency of the second spectrum resource, a minimum frequency of the second network is greater than or equal to a sum of the maximum Doppler shift and the spectrum boundary between the second spectrum resource and the third spectrum resource; or if a center frequency of the third spectrum resource is lower than a center frequency of the second spectrum resource, a maximum frequency of the second network is less than or equal to a sum of the minimum Doppler shift and the spectrum boundary between the second spectrum resource and the third spectrum resource. According to the method, the second network can accurately determine, based on the configuration, the spectrum boundary corresponding to the second network. In this way, a guard band is configured, so that spectrum overlapping caused by a Doppler shift can be avoided, thereby avoiding interference between the first network and the second network.

In a possible implementation, a guard band guard band between the second spectrum resource and the third spectrum resource is greater than or equal to the maximum Doppler shift. In this implementation, the guard band is configured, so that spectrum overlapping caused by a Doppler shift can be avoided, thereby avoiding interference between the first network and the second network.

In another possible implementation, the method further includes: if the third spectrum resource is more than a fourth spectrum resource configured for the second network by using second configuration information, receiving first indication information, where the first indication information indicates the second network to use the third spectrum resource for communication after first time, the first time is a sum of second time and first guard time, and the first guard time is greater than or equal to a maximum propagation delay from the first network to the second network; or if the third spectrum resource is less than a fifth spectrum resource configured for the second network by using third configuration information, receiving second indication information, where the second indication information indicates the second network to use the fifth spectrum resource for communication before third time, the third time is a sum of the second time and second guard time, and the second guard time is less than or equal to a minimum propagation delay from the first network to the second network; and the second time is an effective moment of the first configuration information. In this implementation, in a scenario in which the first network and the second network share a spectrum resource, a configuration of guard time for the second network to use a new spectrum resource is specified. Through this configuration, interference between the first network and the second network can be avoided.

In another possible implementation, the first network is a terrestrial network, and the second network is a satellite network; or the first network is a satellite network, and the second network is a terrestrial network; the maximum propagation delay from the first network to the second network is associated with a maximum distance between coverage of a satellite cell and a satellite and a speed of light; and the minimum propagation delay from the first network to the second network is associated with a minimum distance between the coverage of the satellite cell and the satellite and the speed of light.

In another possible implementation, the maximum Doppler shift and the minimum Doppler shift are associated with a carrier frequency, a moving speed of a satellite, a speed of light, a geocentric angle, an earth radius, and an orbital altitude of the satellite.

According to a second aspect, a spectrum resource determining method is provided. The method is implemented by a server or a chip or a circuit used in the server.

The method includes: sending first configuration information, where the first configuration information includes at least one of the following: a first spectrum resource, a second spectrum resource that corresponds to a first network and that is in the first spectrum resource, a third spectrum resource that corresponds to a second network and that is in the first spectrum resource, a spectrum boundary between the second spectrum resource and the third spectrum resource, a minimum Doppler shift, and a maximum Doppler shift. According to the method, the server configures at least one of the first spectrum resource, the second spectrum resource that corresponds to the first network and that is in the first spectrum resource, the third spectrum resource that corresponds to the second network and that is in the first spectrum resource, the spectrum boundary between the second spectrum resource and the third spectrum resource, the minimum Doppler shift, and the maximum Doppler shift, so that the second network can accurately determine, based on the configuration, a spectrum boundary corresponding to the second network. In this way, a guard band is configured, so that spectrum overlapping caused by a Doppler shift can be avoided, thereby avoiding interference between the first network and the second network.

In a possible implementation, a guard band guard band between the second spectrum resource and the third spectrum resource is greater than or equal to the maximum Doppler shift. In this implementation, the guard band is configured, so that spectrum overlapping caused by a Doppler shift can be avoided, thereby avoiding interference between the first network and the second network.

In another possible implementation, the method further includes: if the third spectrum resource is more than a fourth spectrum resource configured for the second network by using second configuration information, sending first indication information, where the first indication information indicates the second network to use the third spectrum resource for communication after first time, the first time is a sum of second time and first guard time, and the first guard time is greater than or equal to a maximum propagation delay from the first network to the second network; or if the third spectrum resource is less than a fifth spectrum resource configured for the second network by using third configuration information, sending second indication information, where the second indication information indicates the second network to use the fifth spectrum resource for communication before third time, the third time is a sum of the second time and second guard time, and the second guard time is less than or equal to a minimum propagation delay from the first network to the second network; and the second time is an effective moment of the first configuration information. In this implementation, in a scenario in which the first network and the second network share a spectrum resource, a configuration of guard time for the second network to use a new spectrum resource is specified. Through this configuration, interference between the first network and the second network can be avoided.

In another possible implementation, the first network is a terrestrial network, and the second network is a satellite network; or the first network is a satellite network, and the second network is a terrestrial network; the maximum propagation delay from the first network to the second network is associated with a maximum distance between coverage of a satellite cell and a satellite and a speed of light; and the minimum propagation delay from the first network to the second network is associated with a minimum distance between the coverage of the satellite cell and the satellite and the speed of light.

In another possible implementation, the maximum Doppler shift and the minimum Doppler shift are associated with a carrier frequency, a moving speed of a satellite, a speed of light, a geocentric angle, an earth radius, and an orbital altitude of the satellite.

According to a third aspect, a spectrum resource determining method is provided. The method is implemented by a second network or a chip or a circuit used in the second network.

The method includes: receiving first configuration information, where the first configuration information includes at least one of the following: a first spectrum resource, a second spectrum resource that corresponds to a first network and that is in the first spectrum resource, a third spectrum resource that corresponds to a second network and that is in the first spectrum resource, and a spectrum boundary between the second spectrum resource and the third spectrum resource; obtaining location information of the first network and location information of a second network device in the second network; determining, based on the location information of the first network and the location information of the second network device, a minimum Doppler shift and a maximum Doppler shift that separately correspond to the second network device; and determining a spectrum boundary corresponding to the second network device, where if a center frequency of the third spectrum resource is higher than a center frequency of the second spectrum resource, a minimum frequency of the second network device is greater than or equal to a sum of the maximum Doppler shift corresponding to the second network device and the spectrum boundary between the second spectrum resource and the third spectrum resource; or if a center frequency of the third spectrum resource is lower than a center frequency of the second spectrum resource, a maximum frequency corresponding to the second network device is less than or equal to a sum of the minimum Doppler shift corresponding to the second network device and the spectrum boundary between the second spectrum resource and the third spectrum resource. According to the method, in a scenario in which the first network and the second network share a spectrum resource, guard time and a guard band are configured at a cell level, thereby improving resource utilization.

In a possible implementation, the first network includes at least one first network device, the maximum Doppler shift is a maximum value in at least one maximum Doppler shift of the at least one first network device relative to the second network device; and the minimum Doppler shift is a minimum value in at least one minimum Doppler shift of the at least one first network device relative to the second network device.

In another possible implementation, the method further includes: determining, based on the location information of the first network and the location information of the second network device, a maximum propagation delay from the first network to the second network device and a minimum propagation delay from the first network to the second network device; and if the third spectrum resource is more than a fourth spectrum resource configured for the second network by using second configuration information, receiving first indication information, where the first indication information indicates the second network device to use the third spectrum resource for communication after first time, the first time is a sum of second time and first guard time, and the first guard time is greater than or equal to the maximum propagation delay from the first network to the second network device;

or if the third spectrum resource is less than a fifth spectrum resource configured for the second network by using third configuration information, receiving second indication information, where the second indication information indicates the second network device to use the fifth spectrum resource for communication before third time, the third time is a sum of the second time and second guard time, and the second guard time is less than or equal to the minimum propagation delay from the first network to the second network device; and the second time is an effective moment of the first configuration information.

In another possible implementation, the first network includes at least one first network device, and the maximum propagation delay from the first network to the second network device is a maximum value in at least one maximum propagation delay from the at least one first network device to the second network device separately; and the minimum propagation delay from the first network to the second network device is a minimum value in at least one minimum propagation delay from the at least one first network device to the second network device separately.

According to a fourth aspect, a spectrum resource determining method is provided. The method is implemented by a server or a chip or a circuit used in the server.

The method includes: sending first configuration information, where the first configuration information includes at least one of the following: a first spectrum resource, a second spectrum resource that corresponds to a first network and that is in the first spectrum resource, a third spectrum resource that corresponds to a second network and that is in the first spectrum resource, and a spectrum boundary between the second spectrum resource and the third spectrum resource; if the third spectrum resource is more than a fourth spectrum resource configured for the second network by using second configuration information, sending first indication information, where the first indication information indicates a second network device in the second network to use the third spectrum resource for communication after first time, the first time is a sum of second time and first guard time, and the first guard time is greater than or equal to a maximum propagation delay from the first network to the second network device; or if the third spectrum resource is less than a fifth spectrum resource configured for the second network by using third configuration information, sending second indication information, where the second indication information indicates the second network device to use the fifth spectrum resource for communication before third time, the third time is a sum of the second time and second guard time, and the second guard time is less than or equal to a minimum propagation delay from the first network to the second network device; and the second time is an effective moment of the first configuration information. According to the method, in a scenario in which the first network and the second network share a spectrum resource, guard time and a guard band are configured at a cell level, thereby improving resource utilization.

In a possible implementation, the first network includes at least one first network device, a maximum Doppler shift is a maximum value in at least one maximum Doppler shift of the at least one first network device relative to the second network device; and a minimum Doppler shift is a minimum value in at least one minimum Doppler shift of the at least one first network device relative to the second network device.

In another possible implementation, the first network includes at least one first network device, and the maximum propagation delay from the first network to the second network device is a maximum value in at least one maximum propagation delay from the at least one first network device to the second network device separately; and the minimum propagation delay from the first network to the second network device is a minimum value in at least one minimum propagation delay from the at least one first network device to the second network device separately.

According to a fifth aspect, a spectrum resource determining apparatus is provided, and is configured to implement the spectrum resource determining method according to any one of the first aspect and the third aspect or the implementations of the first aspect and the third aspect. The apparatus may be a second network, may be a module (for example, a processor, a chip, or a chip system) used in the second network, or may be a logical node, a logical module, or software that can implement all or some functions of the second network. In an implementation, the spectrum resource determining apparatus may include a sending unit and a receiving unit, and may further include a processing unit. The sending unit and the receiving unit may be independent of each other, or may be combined together (which may be referred to as a "transceiver unit").

According to a sixth aspect, a spectrum resource determining apparatus is provided, and is configured to implement the spectrum resource determining method according to any one of the second aspect and the fourth aspect or the implementations of the second aspect and the fourth aspect. The apparatus may be a server, may be a module (for example, a processor, a chip, or a chip system) used in the server, or may be a logical node, a logical module, or software that can implement all or some functions of the server. In an implementation, the spectrum resource determining apparatus may include a sending unit and a receiving unit, and may further include a processing unit. The sending unit and the receiving unit may be independent of each other, or may be combined together (which may be referred to as a "transceiver unit").

In a possible implementation, the spectrum resource determining apparatus in the fifth aspect and the sixth aspect includes modules configured to separately perform the method according to any one of the first aspect to the fourth aspect or the implementations of the first aspect to the fourth aspect.

When the spectrum resource determining apparatus is configured to implement the method according to any one of the first aspect or the implementations of the first aspect, the transceiver unit is configured to receive first configuration information, where the first configuration information includes at least one of the following: a first spectrum resource, a second spectrum resource that corresponds to a first network and that is in the first spectrum resource, a third spectrum resource that corresponds to a second network and that is in the first spectrum resource, a spectrum boundary between the second spectrum resource and the third spectrum resource, a minimum Doppler shift, and a maximum Doppler shift; and the processing unit is configured to determine a spectrum boundary corresponding to the second network, where if a center frequency of the third spectrum resource is higher than a center frequency of the second spectrum resource, a minimum frequency of the second network is greater than or equal to a sum of the maximum Doppler shift and the spectrum boundary between the second spectrum resource and the third spectrum resource; or if a center frequency of the third spectrum resource is lower than a center frequency of the second spectrum resource, a maximum frequency of the second network is less than or equal to a sum of the minimum Doppler shift and the spectrum boundary between the second spectrum resource and the third spectrum resource.

Optionally, a guard band guard band between the second spectrum resource and the third spectrum resource is greater than or equal to the maximum Doppler shift.

Optionally, the transceiver unit is further configured to: if the third spectrum resource is more than a fourth spectrum resource configured for the second network by using second configuration information, receive first indication information, where the first indication information indicates the second network to use the third spectrum resource for communication after first time, the first time is a sum of second time and first guard time, and the first guard time is greater than or equal to a maximum propagation delay from the first network to the second network; or the transceiver unit is further configured to: if the third spectrum resource is less than a fifth spectrum resource configured for the second network by using third configuration information, receive second indication information, where the second indication information indicates the second network to use the fifth spectrum resource for communication before third time, the third time is a sum of the second time and second guard time, and the second guard time is less than or equal to a minimum propagation delay from the first network to the second network; and the second time is an effective moment of the first configuration information.

Optionally, the first network is a terrestrial network, and the second network is a satellite network; or the

first network is a satellite network, and the second network is a terrestrial network; the maximum propagation delay from the first network to the second network is associated with a maximum distance between coverage of a satellite cell and a satellite and a speed of light; and the minimum propagation delay from the first network to the second network is associated with a minimum distance between the coverage of the satellite cell and the satellite and the speed of light.

Optionally, the maximum Doppler shift and the minimum Doppler shift are associated with a carrier frequency, a moving speed of a satellite, a speed of light, a geocentric angle, an earth radius, and an orbital altitude of the satellite.

When the spectrum resource determining apparatus is configured to implement the method according to any one of the second aspect or the implementations of the second aspect, the transceiver unit is configured to send first configuration information, where the first configuration information includes at least one of the following: a first spectrum resource, a second spectrum resource that corresponds to a first network and that is in the first spectrum resource, a third spectrum resource that corresponds to a second network and that is in the first spectrum resource, a spectrum boundary between the second spectrum resource and the third spectrum resource, a minimum Doppler shift, and a maximum Doppler shift.

Optionally, a guard band guard band between the second spectrum resource and the third spectrum resource is greater than or equal to the maximum Doppler shift.

Optionally, the transceiver unit is further configured to: if the third spectrum resource is more than a fourth spectrum resource configured for the second network by using second configuration information, send first indication information, where the first indication information indicates the second network to use the third spectrum resource for communication after first time, the first time is a sum of second time and first guard time, and the first guard time is greater than or equal to a maximum propagation delay from the first network to the second network; or the transceiver unit is further configured to: if the third spectrum resource is less than a fifth spectrum resource configured for the second network by using third configuration information, send second indication information, where the second indication information indicates the second network to use the fifth spectrum resource for communication before third time, the third time is a sum of the second time and second guard time, and the second guard time is less than or equal to a minimum propagation delay from the first network to the second network; and the second time is an effective moment of the first configuration information.

Optionally, the first network is a terrestrial network, and the second network is a satellite network; or the first network is a satellite network, and the second network is a terrestrial network; the maximum propagation delay from the first network to the second network is associated with a maximum distance between coverage of a satellite cell and a satellite and a speed of light; and the minimum propagation delay from the first network to the second network is associated with a minimum distance between the coverage of the satellite cell and the satellite and the speed of light.

Optionally, the maximum Doppler shift and the minimum Doppler shift are associated with a carrier frequency, a moving speed of a satellite, a speed of light, a geocentric angle, an earth radius, and an orbital altitude of the satellite.

When the spectrum resource determining apparatus is configured to implement the method according to any one of the third aspect or the implementations of the third aspect, the transceiver unit is configured to receive first configuration information, where the first configuration information includes at least one of the following: a first spectrum resource, a second spectrum resource that corresponds to a first network and that is in the first spectrum resource, a third spectrum resource that corresponds to a second network and that is in the first spectrum resource, and a spectrum boundary between the second spectrum resource and the third spectrum resource; the processing unit is configured to obtain location information of the first network and location information of a second network device in the second network; the processing unit is further configured to determine, based on the location information of the first network and the location information of the second network device, a minimum Doppler shift and a maximum Doppler shift that separately correspond to the second network device; and the processing unit is further configured to determine a spectrum boundary corresponding to the second network device, where if a center frequency of the third spectrum resource is higher than a center frequency of the second spectrum resource, a minimum frequency of the second network device is greater than or equal to a sum of the maximum Doppler shift corresponding to the second network device and the spectrum boundary between the second spectrum resource and the third spectrum resource; or if a center frequency of the third spectrum resource is lower than a center frequency of the second spectrum resource, a maximum frequency corresponding to the second network device is less than or equal to a sum of the minimum Doppler shift corresponding to the second network device and the spectrum boundary between the second spectrum resource and the third spectrum resource.

Optionally, the first network includes at least one first network device, the maximum Doppler shift is a maximum value in at least one maximum Doppler shift of the at least one first network device relative to the second network device; and the minimum Doppler shift is a minimum value in at least one minimum Doppler shift of the at least one first network device relative to the second network device.

Optionally, the processing unit is further configured to determine, based on the location information of the first network and the location information of the second network device, a maximum propagation delay from the first network to the second network device and a minimum propagation delay from the first network to the second network device; and the transceiver unit is further configured to: if the third spectrum resource is more than a fourth spectrum resource configured for the second network by using second configuration information, receive first indication information, where the first indication information indicates the second network device to use the third spectrum resource for communication after first time, the first time is a sum of second time and first guard time, and the first guard time is greater than or equal to the maximum propagation delay from the first network to the second network device; or if the third spectrum resource is less than a fifth spectrum resource configured for the second network by using third configuration information, receive second indication information, where the second indication information indicates the second network device to use the fifth spectrum resource for communication before third time, the third time is a sum of the second time and second guard time, and the second guard time is less than or equal to the minimum propagation delay from the first network to the second network device; and the second time is an effective moment of the first configuration information.

Optionally, the first network includes at least one first network device, and the maximum propagation delay from the first network to the second network device is a maximum value in at least one maximum propagation delay from the at least one first network device to the second network device separately; and the minimum propagation delay from the first network to the second network device is a minimum value in at least one minimum propagation delay from the at least one first network device to the second network device separately.

When the spectrum resource determining apparatus is configured to implement the method according to any one of the fourth aspect or the implementations of the fourth aspect, the transceiver unit is configured to send first configuration information, where the first configuration information includes at least one of the following: a first spectrum resource, a second spectrum resource that corresponds to a first network and that is in the first spectrum resource, a third spectrum resource that corresponds to a second network and that is in the first spectrum resource, and a spectrum boundary between the second spectrum resource and the third spectrum resource; and the transceiver unit is further configured to: if the third spectrum resource is more than a fourth spectrum resource configured for the second network by using second configuration information, send first indication information, where the first indication information indicates a second network device in the second network to use the third spectrum resource for communication after first time, the first time is a sum of second time and first guard time, and the first guard time is greater than or equal to a maximum propagation delay from the first network to the second network device; or the transceiver unit is further configured to: if the third spectrum resource is less than a fifth spectrum resource configured for the second network by using third configuration information, send second indication information, where the second indication information indicates the second network device to use the fifth spectrum resource for communication before third time, the third time is a sum of the second time and second guard time, and the second guard time is less than or equal to a minimum propagation delay from the first network to the second network device; and the second time is an effective moment of the first configuration information.

Optionally, the first network includes at least one first network device, a maximum Doppler shift is a maximum value in at least one maximum Doppler shift of the at least one first network device relative to the second network device; and a minimum Doppler shift is a minimum value in at least one minimum Doppler shift of the at least one first network device relative to the second network device.

Optionally, the first network includes at least one first network device, and the maximum propagation delay from the first network to the second network device is a maximum value in at least one maximum propagation delay from the at least one first network device to the second network device separately; and the minimum propagation delay from the first network to the second network device is a minimum value in at least one minimum propagation delay from the at least one first network device to the second network device separately.

In another possible implementation, the spectrum resource determining apparatus in the fifth aspect and the sixth aspect includes a processor coupled to a memory, and the processor is configured to implement a corresponding function in the foregoing spectrum resource determining method performed by the apparatus. The memory is configured to be coupled to the processor, and stores a program (instructions) and/or data necessary for the apparatus. Optionally, the spectrum resource determining apparatus may further include a communication interface, configured to implement communication between the apparatus and another network element. Optionally, the memory may be located inside the spectrum resource determining apparatus, or may be located outside the spectrum resource determining apparatus.

In still another possible implementation, the spectrum resource determining apparatus in the fifth aspect and the sixth aspect includes a processor and a transceiver apparatus. The processor is coupled to the transceiver apparatus, and the processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to receive a signal from a spectrum resource determining apparatus other than the spectrum resource determining apparatus and transmit the signal to the processor, or send a signal from the processor to a spectrum resource determining apparatus other than the spectrum resource determining apparatus. When the spectrum resource determining apparatus is a chip, the transceiver apparatus is a transceiver circuit or an input/output interface.

When the spectrum resource determining apparatus in the fifth aspect and the sixth aspect is a chip, the sending unit may be an output unit, for example, an output circuit or a communication interface, and the receiving unit may be an input unit, for example, an input circuit or a communication interface. When the spectrum resource determining apparatus is a terminal, the sending unit may be a transmitter or a transmitter machine, and the receiving unit may be a receiver or a receiver machine.

According to a seventh aspect, a computer-readable storage medium is provided, where the computer-readable storage medium stores a computer program or instructions. When the computer program or the instructions are executed, the method according to the foregoing aspects is implemented.

According to an eighth aspect, a computer program product including instructions is provided. When the instructions are run on a spectrum resource determining apparatus, the spectrum resource determining apparatus is caused to perform the method according to the foregoing aspects.

According to a ninth aspect, a spectrum resource determining system is provided, where the system includes the spectrum resource determining apparatus according to the fifth aspect and the spectrum resource determining apparatus according to the sixth aspect.

**BRIEF DESCRIPTION OF DRAWINGS**

FIG. 1 is a simplified diagram of a wireless communication system according to an embodiment of this application;
FIG. 2A is a diagram of an NTN scenario based on a transparent payload;
FIG. 2B is a diagram of an NTN scenario based on a regenerative payload;
FIG. 3A is a diagram in which a low orbit satellite interferes with a terrestrial terminal device;
FIG. 3B is a diagram in which a terrestrial terminal device interferes with a low orbit satellite;
FIG. 4 is a diagram of instantaneous dynamic spectrum sharing between LTE FDD and NR;
FIG. 5 is a diagram of coordination of uplink spectrum resources in LNR;

FIG. 6 is a diagram in which radio frames of an LTE cell and an NR cell are not aligned;
FIG. 7 is a diagram of satellite-terrestrial spectrum sharing;
FIG. 8 is a schematic flowchart of a spectrum resource determining method according to an embodiment of this application;
FIG. 9 is a diagram of calculating a Doppler shift;
FIG. 10A is a diagram of an example of determining a spectrum resource;
FIG. 10B is a diagram of another example of determining a spectrum resource;
FIG. 11 is a schematic flowchart of another spectrum resource determining method according to an embodiment of this application;
FIG. 12 is a diagram of spectrum resource configuration update of a first network and a second network;
FIG. 13 is a diagram of an example of resource use after spectrum resource configuration update;
FIG. 14 is another diagram of spectrum resource configuration update of a first network and a second network;
FIG. 15 is a diagram of another example of resource use after spectrum resource configuration update;
FIG. 16 is a diagram of satellite-terrestrial signal propagation;
FIG. 17 is a schematic flowchart of still another spectrum resource determining method according to an embodiment of this application;
FIG. 18A is another diagram of spectrum resource configuration update of a first network and a second network;
FIG. 18B is a diagram of another example of resource use after spectrum resource configuration update;
FIG. 19A is another diagram of spectrum resource configuration update of a first network and a second network;
FIG. 19B is a diagram of another example of resource use after spectrum resource configuration update;
FIG. 20 is a schematic flowchart of still another spectrum resource determining method according to an embodiment of this application;
FIG. 21 is a diagram of still another example of determining a spectrum resource;
FIG. 22A is a diagram of an example of determining a spectrum resource in a scenario in which a satellite interferes with a terrestrial base station;
FIG. 22B is a diagram of another example of determining a spectrum resource in a scenario in which a satellite interferes with a terrestrial base station;
FIG. 23A is a diagram of an example of determining a spectrum resource in a scenario in which a terrestrial base station within satellite coverage interferes with a satellite base station;
FIG. 23B is a diagram of another example of determining a spectrum resource in a scenario in which a terrestrial base station within satellite coverage interferes with a satellite base station;

FIG. 24 is a diagram of a structure of a spectrum resource determining apparatus according to an embodiment of this application; and

FIG. 25 is a diagram of a structure of another spectrum resource determining apparatus according to an embodiment of this application.

## DESCRIPTION OF EMBODIMENTS

The following describes embodiments of this application with reference to the accompanying drawings in embodiments of this application.

"At least one piece (item)" involved in this application below indicates one piece (item) or a plurality of pieces (items). A plurality of pieces (items) mean two or more pieces (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in this application to describe objects, the objects are not limited to the terms. The terms are merely used for distinguishing the objects from each other.

The terms "including", "having", and any variations thereof mentioned in the following descriptions of this application are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device. It should be noted that in this application, the term such as "example" or "for example" is used to represent giving an example, an illustration, or a description. Any method or design scheme described as an "example" or "for example" in this application should not be construed as being preferred or having more advantages than another method or design scheme. Exactly, use of the terms such as "example" or "for example" is intended to present a relative concept in a specific manner.

Technologies provided in this application may be applied to various communication systems. For example, the communication system may be a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) system or a wireless local area network (wireless local area network, WLAN) system, a converged system of a plurality of systems, or a future communication system such as a 6G communication system. The 5G communication system may also be referred to as a new radio (new radio, NR) system.

A network element in the communication system may send a signal to another network element or receive a signal from another network element. The signal may include information, signaling, data, or the like. The network element may alternatively be replaced with an entity, a network entity, a device, a terminal device, a communication module, a node, a communication node, or the like. In this application, the network element is used as an example for description. For example, the communication system may include at least one terminal device and at least one access network device. The access network device may send a downlink signal to the terminal device, and/or the terminal device may send an uplink signal to the access network device. In addition, it may be understood that, if the communication system includes a plurality of terminal devices, the plurality of terminal devices may also send signals to each other. That is, both a signal sending network element and a signal receiving network element may be terminal devices.

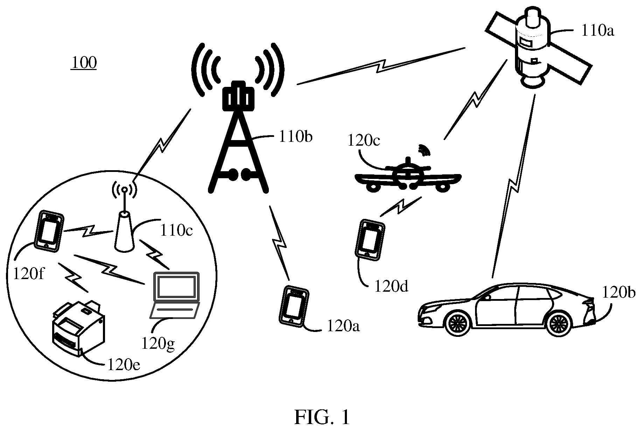

A spectrum resource determining method provided in embodiments of this application may be applied to the wireless communication system such as 5G, 6G, or satellite communication. FIG. 1 is a simplified diagram of a wireless communication system according to an embodiment of this application. As shown in FIG. 1, the wireless communication system includes a radio access network 100. The radio access network 100 may be a next generation (for example, 6G or higher version) radio access network, or a conventional (for example, 5G or 4G) radio access network. One or more terminal devices (120a to 120g, which are collectively referred to as 120) may be connected to each other, or may be connected to one or more network devices (110a to 110c, which are collectively referred to as 110) in the radio access network 100. A connection manner may be wired or wireless. Optionally, FIG. 1 is merely a diagram. The wireless communication system may further include another device, for example, may further include a core network device, a wireless relay device, and/or a wireless backhaul device, which are not shown in FIG. 1.

Optionally, in actual application, the wireless communication system may include a plurality of network devices (also referred to as access network devices), or may include a plurality of terminal devices. One network device may serve one or more terminal devices. One terminal device may also access one or more network devices. A quantity of terminal devices and a quantity of network devices that are included in the wireless communication system are not limited in embodiments of this application.

The network device may be an entity that is configured to transmit or receive a signal on a network side. The network device may be an access device via which the terminal device accesses the wireless communication system in a wireless manner. For example, the network device may be a base station. The base station may broadly cover various names in the following, or may be replaced with the following name, for example, a RAN node, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmitting and receiving point (transmitting and receiving point, TRP), a transmitting point (transmitting point, TP), a main station MeNB, a secondary station SeNB, a multi-standard radio (multi-standard radio, MSR) node, a home base station, a network controller, an access node, a radio node, an access point (access point, AP), a transmission node, a transceiver node, a baseband unit (building baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, or a positioning node. The base station may be a macro base station, a micro base station, a relay node, a donor node, an analogue, or a combination thereof. Alternatively, the network device may be a communication module, a modem, or a chip disposed in the foregoing device or apparatus. Alternatively, the network device may be a mobile switching center, a device functioning as the base station in device-to-device (device-to-device, D2D), vehicle-to-everything (vehicle-to-everything, V2X), and machine-to-machine (machine-to-machine, M2M) communication, a network side device in a 6G network, a device functioning as the base station in a future communication system, or the like. The network device may support networks with a same access technology or different access technologies. A specific technology and a specific device form that are used by the network device are not limited in embodiments of this application.

The network device may be fixed or mobile. For example, base stations 110b and 110c are stationary, and are responsible for wireless transmission and reception in one or more cells from the terminal device 120. A helicopter or an uncrewed aerial vehicle 120c shown in FIG. 1 may be configured to serve as a mobile base station, and one or more cells may move based on a location of the mobile base station 120c. In another example, the helicopter or the uncrewed aerial vehicle (120c) may be configured to serve as a terminal device communicating with the satellite base station 110a.

In this application, a spectrum resource determining apparatus configured to implement a function of the access network may be an access network device, a network device having a part of the function of the access network, or an apparatus that can support implementation of the function of the access network, for example, a chip system, a hardware circuit, a software module, or a hardware circuit plus a software module. The apparatus may be mounted in the access network device or used together with the access network device. In the method in this application, an example in which the spectrum resource determining apparatus configured to implement the function of the access network device is an access network device is used for description.

The terminal device may be an entity, for example, a mobile phone, that is configured to receive or perform transmission of a signal on a user side. The terminal device may be configured to connect to a person, an object, and a machine. The terminal device may communicate with one or more core networks via the network device. The terminal device includes a handheld device having a wireless connection function, another processing device connected to a wireless modem, a vehicle-mounted device, and the like. The terminal device may be a portable, pocketsized, handheld, computer built-in, or vehicle-mounted mobile apparatus. The terminal device 120 may be widely used in various scenarios, such as cellular communication, D2D, V2X, point-to-point (point-to-point, P2P), machine-to-machine (machine-to-machine, M2M), machine-type communication (machine-type communication, MTC), the internet of things (internet of things, IoT), virtual reality (virtual reality, VR), augmented reality (augmented reality, AR), industrial control, self-driving, telemedicine, a smart grid, smart furniture, a smart office, a smart wearable, smart transportation, a smart city, an uncrewed aerial vehicle, a robot, remote sensing, passive sensing, positioning, navigation and tracking, and autonomous delivery and mobility. Some examples of the terminal device 120 are a 3GPP standard user equipment (user equipment, UE), a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, a flight, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device, for example, a smartwatch, a VR device, an AR device, a wireless terminal in industrial control (industrial control), a terminal in an internet of vehicles system, a wireless terminal in self-driving (self-driving), a wireless terminal in a smart grid (smart grid), a wireless terminal in transportation security (transportation safety), a wireless terminal in a smart city (smart city), for example, a smart fuel dispenser, a terminal device on a high-speed train, and a wireless terminal in smart home (smart home), for example, a smart speaker, a smart coffee machine, or a smart printer. The terminal device 120 may be a wireless device in the foregoing scenarios or an apparatus configured to be disposed in the wireless device, for example, a communication module, a modem, or a chip in the foregoing device. The terminal device may also be referred to as a terminal, a terminal device, a user equipment (user equipment, UE), a mobile station (mobile station, MS), a mobile terminal (mobile terminal, MT), or the like. Alternatively, the terminal device may be a terminal device in a future wireless communication system. The terminal device may be used in a dedicated network device, a general-purpose device, or the like. A specific technology and a specific device form that are used by the terminal device are not limited in embodiments of this application.

Optionally, the terminal device may be configured to serve as a base station. For example, the UE may serve as a scheduling entity that provides sidelink signals between UEs in V2X, D2D, P2P, or the like. As shown in FIG. 1, a cellular phone 120a and a car 120b communicate with each other by using sidelink signals. The cellular phone 120a communicates with a smart home device 120e without relaying a communication signal via the base station 110b.

In this application, a spectrum resource determining apparatus configured to implement a function of the terminal device may be a terminal device, a terminal device having a part of the function of the terminal device, or an apparatus that can support implementation of the function of the terminal device, for example, a chip system. The apparatus may be mounted in the terminal device or used together with the terminal device. In this application, the chip system may include a chip, or may include a chip and another discrete component. In the technical solutions provided in this application, an example in which the spectrum resource determining apparatus is a terminal device or a UE is used for description.

Optionally, the wireless communication system usually includes a cell, the base station provides cell management, and the base station provides a communication service for a plurality of mobile stations (mobile stations, MSs) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. Optionally, one cell may correspond to one carrier or component carrier.

In some deployments, the network device mentioned in embodiments of this application may be a CU, or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, compared with the CPRI, the interface performs transfer of a part of downlink and/or uplink baseband functions. For example, for downlink, one or more of precoding (precoding), digital beamforming (beamforming, BF), or inverse fast Fourier transform (inverse fast Fourier transform, IFFT)/-cyclic prefix (cyclic prefix, CP) addition is moved from the DU to the RU for implementation; and for uplink, one or more of digital beamforming (beamforming, BF) or fast Fourier transform (fast Fourier transform, IFFT)/cyclic prefix (cyclic prefix, CP) removal is moved from the DU to the RU for implementation. In a possible implementation, the interface may be an enhanced common public radio interface (enhanced common public radio interface, eCPRI). In an eCPRI architecture, split manners between the DU and RU are different, corresponding to different categories (categories, Cats) of eCPRIs, such as eCPRI Cats A, B, C, D, E, and F.

The eCPRI Cat A is used as an example. For downlink transmission, splitting is performed at layer mapping. The DU is configured to implement the layer mapping and one or more functions (namely, one or more of encoding, rate matching, scrambling, modulation, and the layer mapping) before the layer mapping, and other functions (for example, one or more of RE mapping, digital beamforming (beamforming, BF), or inverse fast Fourier transform (inverse fast Fourier transform, IFFT)/-cyclic prefix (cyclic prefix, CP) addition) after the layer mapping are moved to the RU for implementation. For uplink transmission, splitting is performed at RE demapping. The DU is configured to implement the demapping and one or more functions (namely, one or more of the following functions: decoding, de-rate matching, descrambling, demodulation, inverse discrete Fourier transform (inverse discrete Fourier transform, IDFT), channel equalization, and the RE demapping) before the demapping, and other functions (for example, one or more of digital BF or fast Fourier transform (fast Fourier transform, FFT)/CP removal) after the demapping are moved to the RU for implementation. It may be understood that, for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of the software module and the hardware module.

In embodiments of this application, an apparatus configured to implement a function of the network device may be a network device, or an apparatus that can support the network device in implementing the function, for example, a chip system, a hardware circuit, a software module, or a combination of the hardware circuit and the software module. The apparatus may be mounted in the network device or used together with the network device. In embodiments of this application, an example in which the apparatus configured to implement the function of the network device is a network device is merely used for description, and constitutes no limitation on the solutions in embodiments of this application.

It may be understood that, this application may be applied between the network device and the terminal device.

Communication between the network device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal device may further include an artificial intelligence (artificial intelligence, AI) layer for transmission of data related to an AI function.

Data transmission between the network device and the terminal device is used as an example. Data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used for providing a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another spectrum resource determining apparatus. The non-access stratum may be used for forwarding user data, for example, forwarding uplink data received from the application layer to the SDAP layer, or forwarding downlink data received from the SDAP layer to the application layer.

It should be understood that, a quantity and types of devices in the communication system shown in FIG. 1 are merely used as an example. This application is not limited thereto. In actual application, the communication system may further include more terminal devices and more access network devices, and may further include another network element, for example, may include a core network device and/or a network element configured to implement an artificial intelligence function.

It may be understood that, all or a part of functions implemented by one or more of the terminal device, the access network device, the core network device, or the network element configured to implement the artificial intelligence function may be virtualized, that is, implemented by using one or more of a dedicated processor or a general-purpose processor and a corresponding software module. Because the terminal device and the access network device are related to an air interface transmission interface, a transceiver function of the interface may be implemented by hardware. Core network devices such as an operation, administration, and maintenance (operation, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over-the-top (over-the-top, OTT) system.

Several concepts that may be used in this application are first described.

(1) NTN network

The NTN network is a network that uses radio frequency resources on a satellite (or an uncrewed aerial vehicle system (unmanned aircraft system, UAS) platform and a high altitude communication platform (high altitude platform station, HAPS)). Compared with a terrestrial cellular network (for example, a 5G mobile communication system), the NTN network has characteristics of wide coverage, a low delay, broadband, and low costs. As a supplement and extension of a terrestrial network, the NTN network can implement wide-area seamless coverage that cannot be implemented by a wired telephone network and a terrestrial mobile communication network, to effectively resolve an Internet access problem in areas with insufficient communication infrastructure. A large quantity of satellites are deployed in a near-earth orbit, and a round-trip transmission delay of data between a satellite and a terrestrial terminal is greatly reduced, reaching a low delay of tens of milliseconds. The use of technologies such as a high frequency band, a multi-point beam, and frequency multiplexing significantly improves a communication capability of the satellite, reduces a unit broadband cost, and meets a requirement of a high information rate service. Compared with communication infrastructures such as a terrestrial 5G base station and a submarine optical fiber and cable, the NTN has a significant cost advantage. Modern small satellites have low development and manufacturing costs, and a software-defined technology can further prolong service life of an on-orbit satellite. The NTN network may be used in scenarios such as global coverage (such as remote areas and ocean-going ships), emergency relief (such as disaster monitoring and emergency communication), internet of everything, and high-speed movement (such as high-speed railways and airplanes).

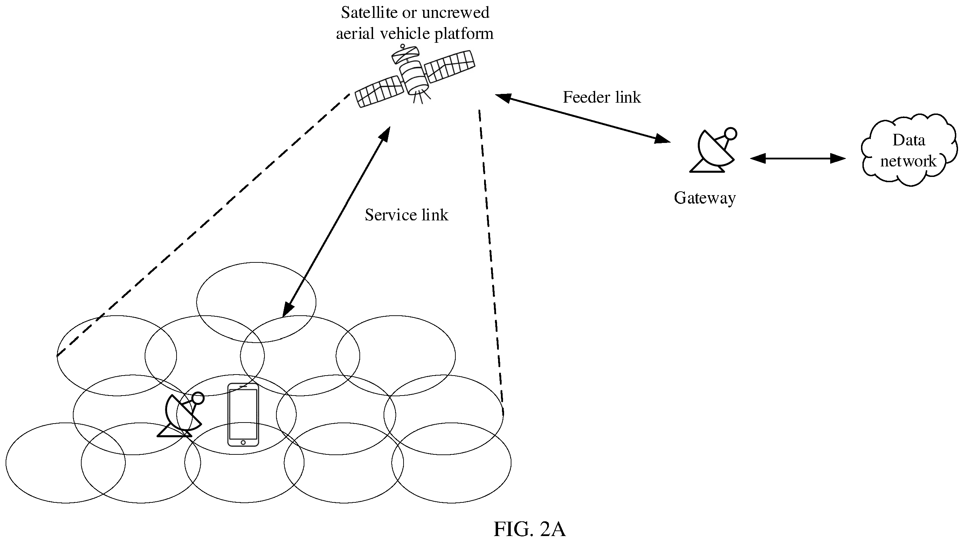

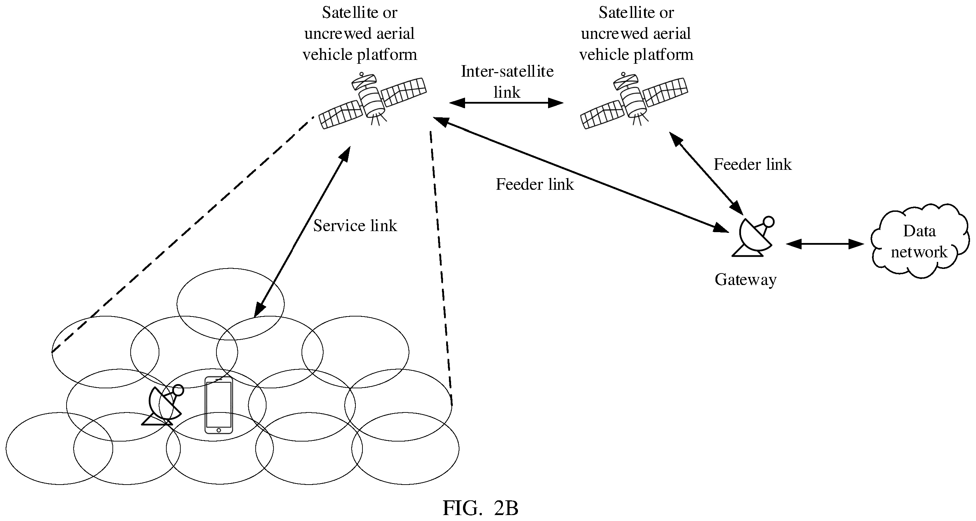

Typical scenarios for the NTN network to provide terminal device access are a transparent payload (transparent payload) and a regenerative payload (regenerative payload). FIG. 2A is a diagram of an NTN scenario based on a transparent payload. The transparent payload is a payload that changes a frequency carrier of an uplink radio frequency signal and filters and amplifies the signal before downlink transmission. This payload has only a radio frequency processing unit and does not have processing such as baseband demodulation or decoding. Therefore, a signal waveform is unchanged and repeated. FIG. 2B is a diagram of an NTN scenario based on a regenerative payload. The regenerative payload is a payload that transforms and amplifies an uplink radio frequency (radio frequency, RF) signal before the uplink radio frequency signal is transmitted on a downlink. Transformation of a signal refers to digital processing, and may include demodulation, decoding, re-encoding, re-modulation, and/or filtering. This is equivalent to the satellite (or the UAS platform) having all or some functions of a base station.

The NTN network generally has the following elements:

(1) There are one or more gateways (gateways) that connect the NTN network and a common data network (common data network).
(2) A feeder link (feeder link) is a radio link between the gateway and the satellite (or the UAS platform).
(3) A service link (service link) is a radio link between a terminal device and the satellite (or the UAS platform).
(4) The satellite (or the UAS platform) can implement the transparent payload and the regenerative payload.
(5) It is optional whether there is an inter-satellite link (inter-satellite link, ISL) on a satellite constellation. The inter-satellite link requires that a satellite is a regenerative payload (that is, if there is the inter-satellite link, the satellite needs to be the regenerative payload). The ISL may operate at an RF frequency or an optical band.
(6) The terminal device is served by a satellite (or a UAS platform) in a target service area.

(2) Satellite spectrum

Satellite communication operates at a microwave frequency band with a frequency range of 1 GHz to 40 GHz. The frequency range may be divided into L, S, C, X, Ku, K and Ka based on a frequency band. Different frequency bands correspond to different purposes. The K frequency band is located in a frequency window that is most affected by an atmospheric absorption loss and is not suitable for satellite communication. Therefore, common satellite communication frequency bands are L, S, C, X, Ku and Ka.

The L frequency band and the S frequency band are used for satellite mobile communication, that is, common handheld satellite phones. The C frequency band is low. Therefore, a signal coverage is large and the C frequency band is less affected by weather. The C frequency band is often used for private network communication of the government and enterprises, a transnational private line, content distribution of a television station, and the like. The X frequency band is a controlled frequency band and is usually used by the government and military departments, and cannot be used for civil commercial use. The Ku frequency band has a high frequency and is prone to signal fluctuation caused by an antenna. However, a signal strength of the Ku frequency band is higher than that of the C frequency band. Therefore, a diameter of a ground receiving antenna is much smaller, and may be usually as small as 0.35 m. The Ku frequency band is suitable for satellite television live broadcasting to a home. The Ka frequency band is emerging and put into use in recent years. Because the C frequency band and the Ku frequency band are almost saturated and cannot carry more services, the Ka frequency band with a higher frequency is being searched for. A higher frequency band indicates more bandwidth resources and more service capacity that can be supported. In recent years, with the surge of satellite internet access requirements, people start to focus on the Ka frequency band with a higher frequency. Although the Ka frequency band is affected by weather more easily than the Ku frequency band, the Ka frequency band has a higher operating bandwidth, a higher signal strength, and a smaller antenna diameter, and is more valuable for development.

With booming development of LEO satellite communication, a frequency band such as Ku/Ka/Q/V has become a hotspot for satellite communication application, and spectrum resources are quickly occupied and become scarce gradually. To expand a bandwidth, LEO satellite communication attempts to seek co-construction and sharing on spectrum resources of international mobile telecommunications (international mobile telecommunications, IMT) or a geostationary earth orbit (geostationary earth orbit, GEO).

(3) Inter-system interference

Spectrum co-construction and sharing can improve resource utilization and reduce construction costs. However, a problem of co-channel/adjacent-channel interference between a satellite network and a terrestrial cellular network needs to be resolved. The inter-system interference may be classified into downlink interference and uplink interference based on a signal direction.

The downlink interference has the following characteristics:

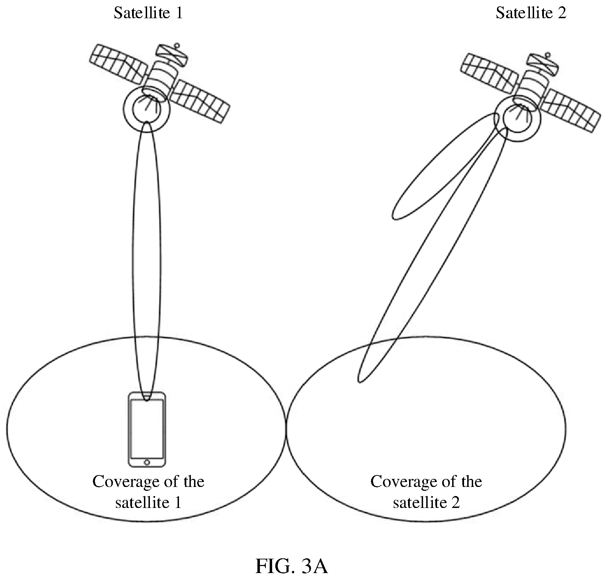

(1) There are few interference sources. An example in which a low orbit satellite interferes with a terrestrial terminal is used. FIG. 3A is a diagram in which a low orbit satellite interferes with a terrestrial terminal device. A main interference source is a satellite 1 that covers the terminal. Interference caused by a satellite 2 to the terminal is mainly from a side lobe, a path loss is larger, and an interference level is low.
(2) Because a terrestrial base station/low orbit satellite is closer to a terminal device, interference is strong.

The uplink interference has the following characteristics:

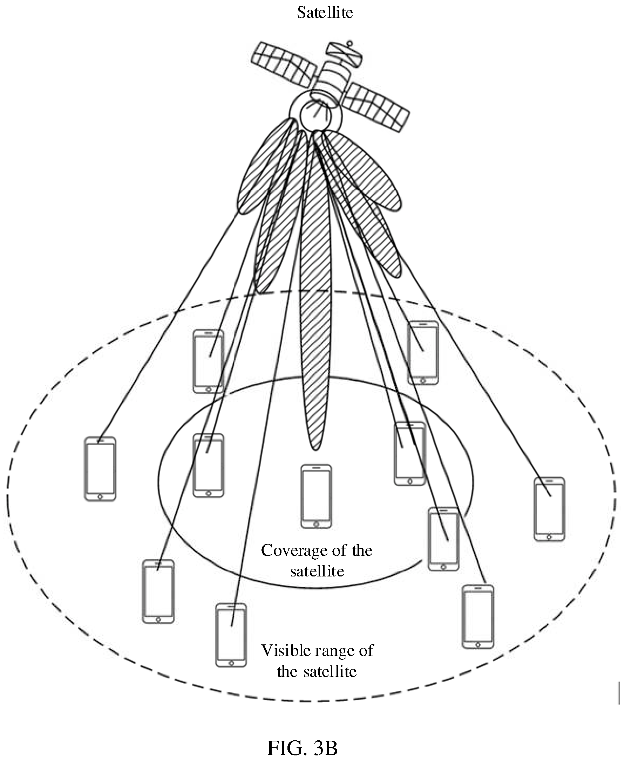

(1) There are a large quantity of interference sources: An example in which a terrestrial terminal interferes with a low orbit satellite is used. FIG. 3B is a diagram in which a terrestrial terminal device interferes with a low orbit satellite. Interference sources are all terrestrial terminals within a satellite visible range.
(2) Strong aggregated interference: A main interference source is a terminal near a main lobe of a satellite beam. In this case, a satellite receiving gain is large.
(3) Beam-level: In a single-satellite multi-beam scenario, a satellite undergoes different interference in different beam directions.

In terms of spectrum resource co-construction and sharing, in an early stage of 5G construction, some operators do not have independent NR spectrum resources. As a result, a 5G network cannot be deployed. Some operators have independent NR spectrum resources. However, spectrum utilization is low due to a low penetration rate of 5G terminals in the early stage. In a long term evolution-new radio (LTE-NR, LNR) feature, this problem is resolved through spectrum sharing between LTE and NR.

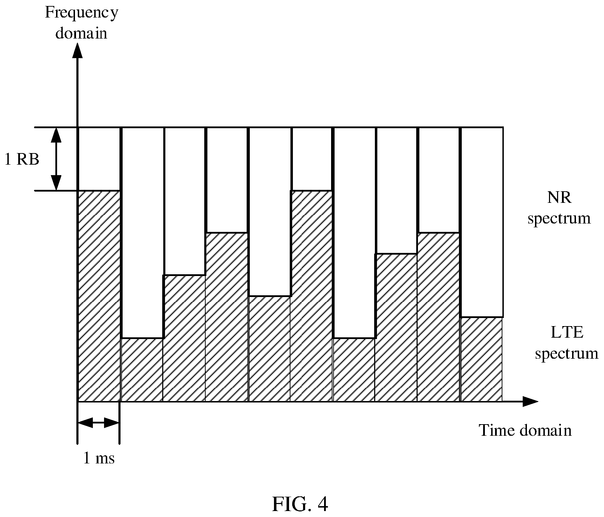

FIG. 4 is a diagram of instantaneous dynamic spectrum sharing between LTE frequency division duplex (frequency division duplex, FDD) and NR. The instantaneous dynamic spectrum sharing between LTE FDD and NR reaches a granularity of 1 ms in time domain, and a sharing granularity in frequency domain is one resource block (resource block, RB).

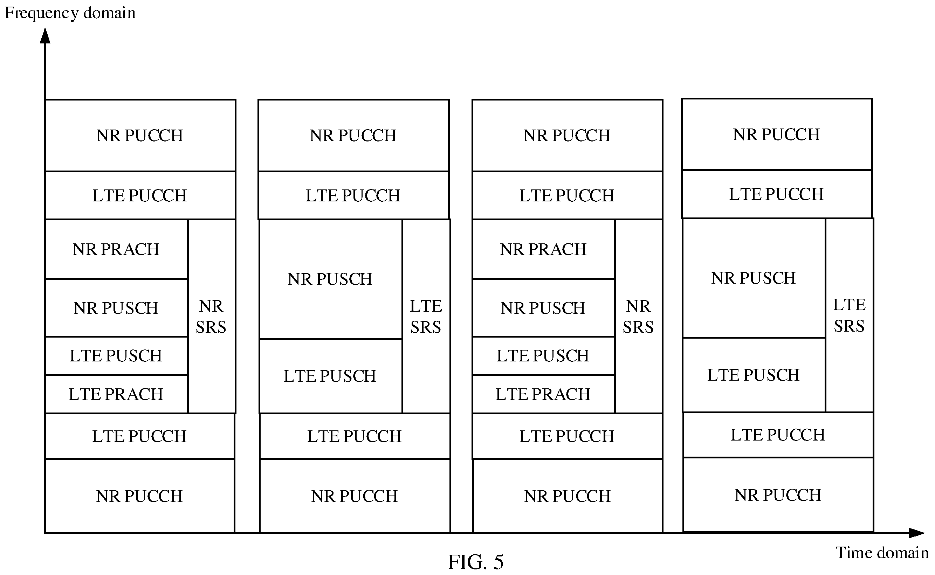

In LNR, interference and conflict problems in a sharing process are avoided through coordinated scheduling of uplink and downlink physical channels and signal resources. Coordination of an uplink spectrum resource is unified and coordinated scheduling of a spectrum resource occupied by each uplink physical channel. Specifically, FIG. 5 is a diagram of coordination of uplink spectrum resources in LNR. NR PUCCHs are symmetrically fixed at two ends of frequency domain. LTE PUCCHs are symmetrically deployed at the two ends of frequency domain, adjacent to the NR PUCCHs. LTE PRACHs are deployed adjacent to low-frequency ends of LTE PUCCHs, and NR PRACHs are deployed adjacent to high-frequency ends of LTE PUCCHs. LTE and NR PUSCHs are dynamically shared based on service priorities and spectrum priorities.

For downlink spectrum resource coordination, priorities of different physical channels and signals are set. When a resource conflict occurs, a channel or signal with a high priority is reserved. Specifically, a synchronization broadcast channel and signal (an SS and a PBCH) >a reference signal (a DMRS, a CSI-RS, a CRS (LTE only), and a PT-RS (NR only))>a control channel (a PDCCH)>a traffic channel (a PDSCH). Channels or signals of a same type avoid each other in a static or dynamic manner. The processing of some channels and signals is used as an example. The LTE PDSCH proactively avoids an NR SSB (SS/PBCH), the NR PDSCH proactively avoids the LTE CRS, and the LTE and NR PDCCHs and PDSCHs dynamically share resources on demand.

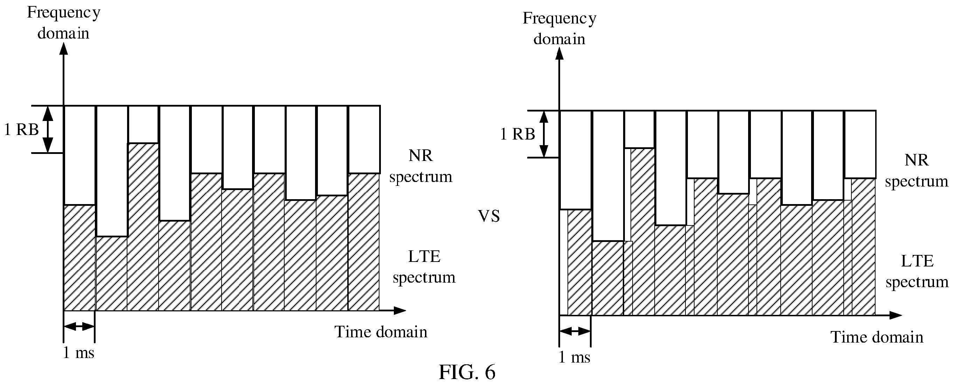

However, the LNR requires that an LTE cell and an NR cell that participate in spectrum sharing meet a requirement of complete alignment of radio frames and subframes. If the subframes are not aligned, mutual interference is caused by spectrum overlapping. FIG. 6 is a diagram in which radio frames of an LTE cell and an NR cell are unaligned.

However, in a satellite-terrestrial scenario, it is difficult to implement and maintain frame-level synchronization between a satellite and a large quantity of terrestrial base stations. Therefore, the LNR mechanism is not applicable to a satellite-terrestrial spectrum sharing scenario.

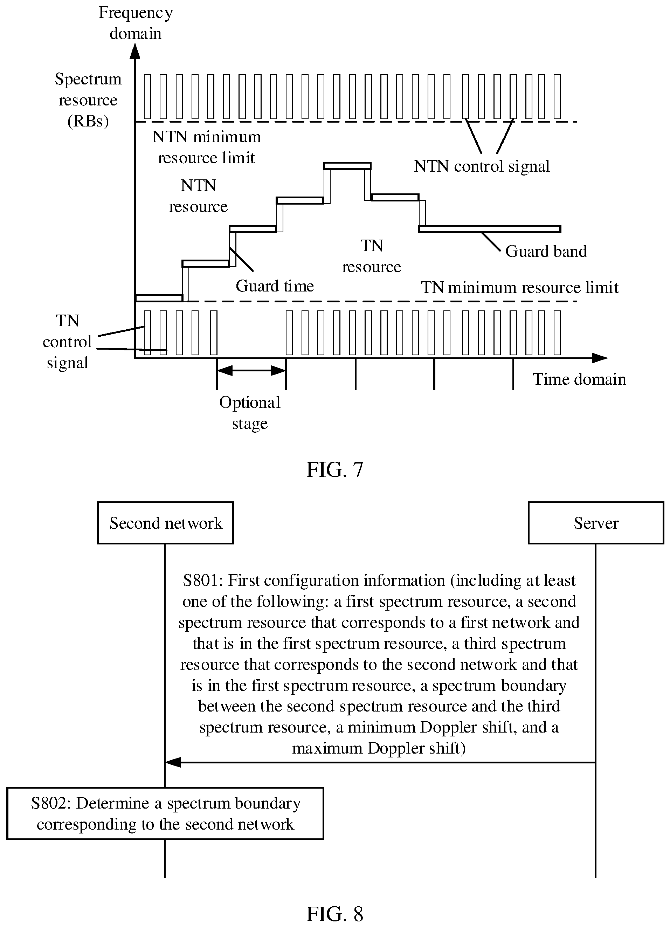

Currently, a satellite-terrestrial dynamic spectrum sharing solution is proposed. FIG. 7 is a diagram of satellite-terrestrial spectrum sharing. The main ideas are as follows:

> (1) Control signaling is sent on a fixed spectrum resource of each network.
> (2) Some RBs form a guard band (guard band) to avoid mutual interference between a TN and an NTN.
> (3) Because the TN and the NTN are not synchronous, guard time (guard time) needs to be set during spectrum resource update, to avoid mutual interference between the TN and the NTN.
> (4) A spectrum management server (spectrum management server, SMS) determines spectrum resource allocation based on network load.

This spectrum sharing solution does not require accurate synchronization between the NTN and the TN, and may be used in a satellite-terrestrial spectrum sharing scenario, but a method for configuring the guard band is not specified. Further, a method for configuring the guard time is not specified.

Therefore, an embodiment of this application provides a spectrum resource determining solution. A server configures at least one of a first spectrum resource, a second spectrum resource that corresponds to a first network and that is in the first spectrum resource, a third spectrum resource that corresponds to a second network and that is in the first spectrum resource, a spectrum boundary between the second spectrum resource and the third spectrum resource, a minimum Doppler shift, and a maximum Doppler shift, so that the second network can accurately determine, based on the configuration, a spectrum boundary corresponding to the second network. In this way, a guard band is configured, so that spectrum overlapping caused by a Doppler shift can be avoided, thereby avoiding interference between the first network and the second network.

The following describes, based on the communication system shown in FIG. 1, the spectrum resource determining method provided in this application.

In this application, "sending information to... (for example, a second network)" or a related example in the accompanying drawings may be understood as that a destination end of the information is the second network. Directly or indirectly sending the information to the second network may be included. "Receiving information from... (for example, a second network)" or "receiving information from... (for example, the second network)" or a related example in the accompanying drawings may be understood as that a source end of the information is the second network, and directly or indirectly receiving information from the second network may be included. The information may undergo necessary processing, for example, a format change, between the source end for sending the information and the destination end. However, the destination end may understand valid information from the source end. A similar expression in this application may be understood similarly, and details are not described herein again.

The following describes in detail the spectrum resource determining method provided in embodiments of this application. It may be understood that, in this application, an example in which a second network and a server are used as execution bodies of an interaction example is used for description. However, an execution body of the interaction example is not limited in this application. For example, the second network in the method provided in this application may be a chip, a chip system, or a processor used in the second network, or may be a logical node, a logical module, or software that can implement all or some functions of the second network. The server in the method provided in this application may be a chip, a chip system, or a processor used in the server, or may be a logical node, a logical module, or software that can implement all or some functions of the server.

FIG. 8 is a schematic flowchart of a spectrum resource determining method according to an embodiment of this application. For example, the method may include the following steps.

S801: The server sends first configuration information to the second network; and correspondingly, the second network receives the first configuration information.

For example, the server in this embodiment may be an SMS.

In this embodiment, a first network and the second network share a first spectrum resource, and communication in the first network may cause interference to the second network. For example, the first network may be a TN, and the second network is an NTN; or the first network may be an NTN, and the second network is a TN.

If the first network and the second network perform spectrum resource sharing, and communication in the first network may cause interference to the second network, the second network needs to determine a spectrum boundary corresponding to the second network, to avoid interference from the first network.

Before the spectrum boundary corresponding to the second network is determined, the server first sends the first configuration information to the second network. Further, the server may send the first configuration information to the first network.

The first configuration information includes at least one of the following: the first spectrum resource, a second spectrum resource that corresponds to the first network and that is in the first spectrum resource, a third spectrum resource that corresponds to the second network and that is in the first spectrum resource, a spectrum boundary between the second spectrum resource and the third spectrum resource, a minimum Doppler shift, and a maximum Doppler shift.

The first spectrum resource is a spectrum resource shared by the first network and the second network, and the server configures the second spectrum resource in the first spectrum resource for the first network to use, and configures the third spectrum resource in the first spectrum resource for the second network to use. For example, a granularity of the spectrum resource may be an RB, a resource block group (resource block group, RBG), a frequency range, or the like.

To avoid spectrum overlapping caused by a Doppler shift and further avoid interference between the first network and the second network, the spectrum boundary $f_{\text{boundary}}$ exists between the second spectrum resource and the third spectrum resource.

The server further configures the minimum Doppler (Doppler) shift $fd_{\text{min}}$ and the maximum Doppler shift $fd_{\text{max}}$ for the second network. $fd_{\text{min}} = -fd_{\text{max}}$ (where a plus or minus sign is considered). The minimum Doppler shift is a network-level minimum Doppler shift, and the maximum Doppler shift is a network-level minimum Doppler shift.

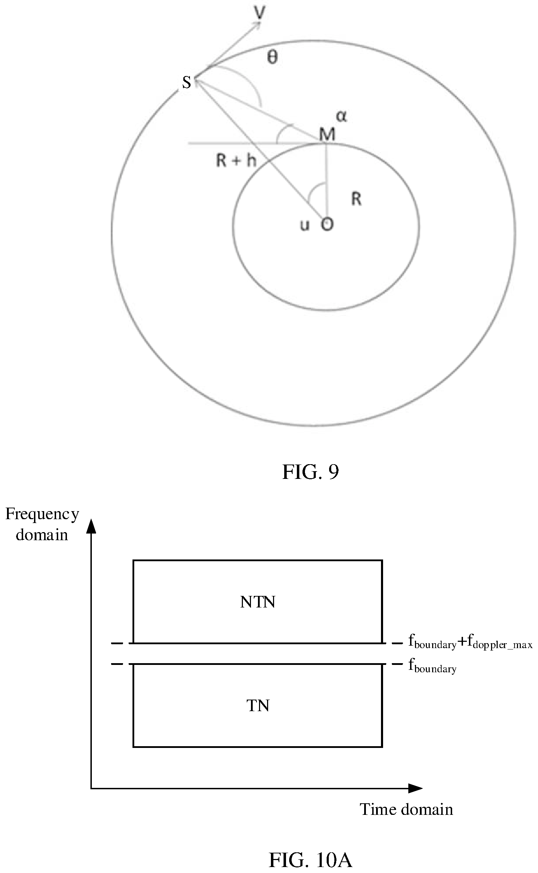

FIG. 9 is a diagram of calculating a Doppler shift, where a small circle represents the earth, and a large circle represents an orbit of a satellite. It is assumed that an edge point within coverage of a satellite cell is M, a corresponding maximum Doppler shift is

$$fd_{\text{max}} = \frac{F_c \cdot v}{c} \cdot \frac{\sin u}{\sqrt{1+\gamma^2 - 2\gamma \cos u}} \quad , \quad \text{where}$$

$\gamma = \frac{R+h}{R}$ , $u$ is a geocentric angle, $F_c$ is a carrier frequency, $v$ is a moving speed of a satellite, R is an earth radius, h is an orbital altitude of the satellite, and c is a speed of light.

S802: The second network determines the spectrum boundary corresponding to the second network.

The second network determines the spectrum boundary corresponding to the second network in the following two cases.

In a first case, if a center frequency of the third spectrum resource is higher than a center frequency of the second spectrum resource, a minimum frequency of the second network is greater than or equal to a sum of the maximum Doppler shift and the spectrum boundary between the second spectrum resource and the third spectrum resource, that is, the minimum frequency of the second network is greater than or equal to

$f_{\text{boundary}} + f_{\text{doppler}}^{\text{max}}$ , and a guard band is greater than or equal to $fd_{\text{max}}$.

FIG. 10A is a diagram of an example of determining a spectrum resource. It is assumed that the first network is a TN, and the second network is an NTN. If a center frequency of a spectrum resource of the NTN is higher than a center frequency of a spectrum resource of the TN, a minimum frequency of the NTN is greater than or equal to $f_{\text{boundary}} + f_{\text{doppler}}^{\text{max}}$ , and a guard band is greater than or equal to $fd_{\text{max}}$.

In a second case, if a center frequency of the third spectrum resource is lower than a center frequency of the second spectrum resource, a maximum frequency of the second network is less than or equal to a sum of the minimum Doppler shift and the spectrum boundary between the second spectrum resource and the third spectrum resource, that is, the maximum frequency of the second network is less than or equal to

$f_{\text{boundary}} + f_{\text{doppler}}^{\text{min}}$ , and a guard band is greater than or equal to $fd_{\text{max}}$.

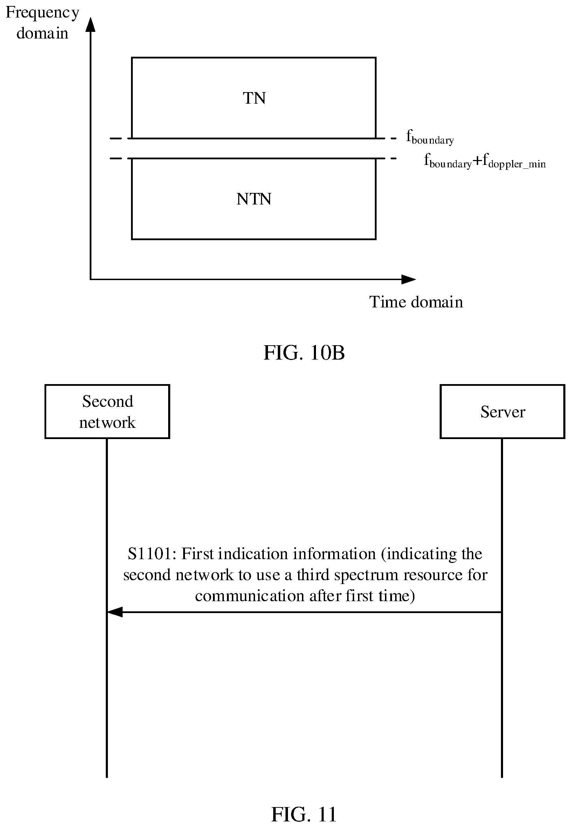

FIG. 10B is a diagram of another example of determining a spectrum resource. It is assumed that the first network is a TN, and the second network is an NTN. If a center frequency of a spectrum resource of the NTN is lower than a center frequency of a spectrum resource of the TN, a maximum frequency of the NTN is less than or

equal to $f_{\text{boundary}} + f_{\text{doppler}}^{\text{min}}$ , and a guard band is greater than or equal to $fd_{\text{max}}$.

According to the spectrum resource determining method provided in this embodiment of this application, the server configures at least one of the first spectrum resource, the second spectrum resource that corresponds to the first network and that is in the first spectrum resource, the third spectrum resource that corresponds to the second network and that is in the first spectrum resource, the spectrum boundary between the second spectrum resource and the third spectrum resource, the minimum Doppler shift, and the maximum Doppler shift, so that the second network can accurately determine, based on the configuration, the spectrum boundary corresponding to the second network. In this way, the guard band is configured, so that spectrum overlapping caused by the Doppler shift can be avoided, thereby avoiding interference between the first network and the second network.

The configuration of the guard band is described in the foregoing embodiments. A configuration of guard time is described in the following embodiments. The following embodiments may be implemented separately, or may be implemented with reference to the foregoing embodiments of the configuration of the guard band.

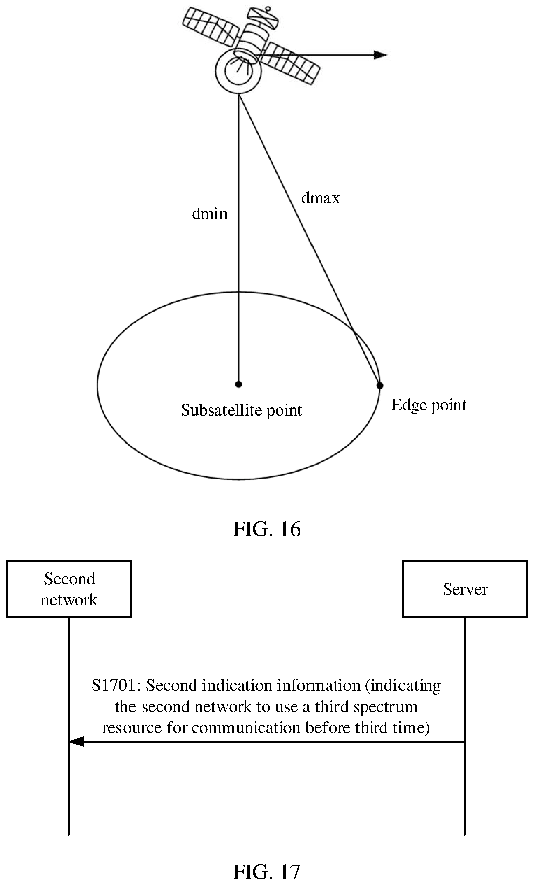

Depending on whether the third spectrum resource configured by the server for the second network is more than or less than a spectrum resource previously configured by the server for the second network, the following separately describes embodiments shown in FIG. 11 and FIG. 17.

FIG. 11 is a schematic flowchart of another spectrum resource determining method according to an embodiment of this application. In this embodiment, a third spectrum resource configured by a server for a second network is more than a fourth spectrum resource previously configured by the server for the second network. For example, the method may include the following steps.

S1101: The server sends first indication information to the second network; and correspondingly, the second network receives the first indication information.

The server respectively configures parts of a first spectrum resource for a first network and the second network, that is, the first network and the second network share the first spectrum resource. In different time periods, spectrum resources configured by the server for the second network may change. For example, in this embodiment, the third spectrum resource currently configured by the server for the second network is more than the fourth spectrum resource previously configured by the server (configured by using second configuration information) for the second network.

In this embodiment, frame-level synchronization between the first network and the second network is not required.

When the configuration of the server is updated, the server further needs to send the first indication information to the second network. The first indication information indicates the second network to use the third spectrum resource for communication after first time, the first time is a sum of second time and first guard time, and the first guard time is greater than or equal to a maximum propagation delay from the first network to the second network.

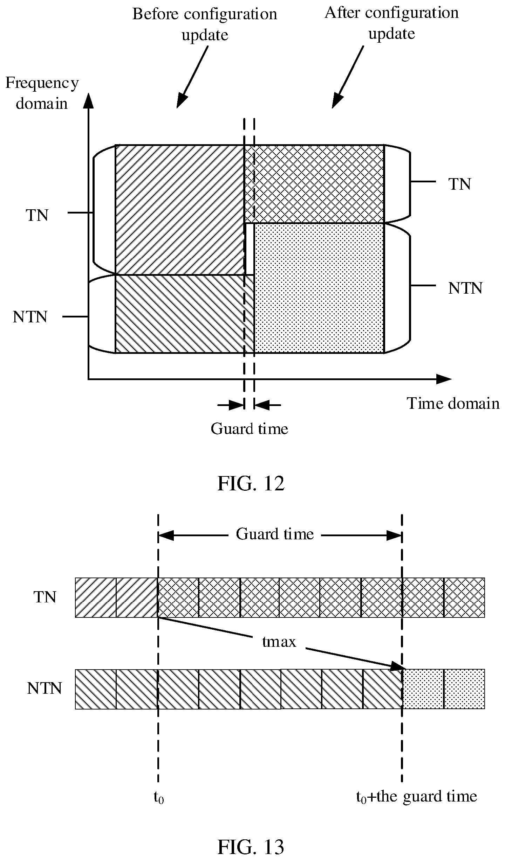

An example in which the first network is a TN and the second network is an NTN is used. FIG. 12 is a diagram of spectrum resource configuration update of the first network and the second network. The TN and the NTN share the first spectrum resource. A left side of a dashed line is a spectrum resource configuration situation before configuration update, and a right side of a dashed line is a spectrum resource configuration situation after configuration update. A spectrum resource currently configured for the TN is less than a spectrum resource previously configured for the TN, and a spectrum resource currently configured for the NTN is more than a spectrum resource previously configured for the NTN. Spectrum resource configuration update occurs at second time $t_0$, that is, the second time is an effective moment of the configuration of the server. The server may further indicate the second time to the TN and the NTN.

The server further indicates, to the NTN, that the first guard time guard time is greater than or equal to $t_{max}$. equal to $t_{max}$ based on location information of a base station. In addition, after $t_0$, the TN may use a new spectrum resource (namely, the second spectrum resource) for communication, and the NTN continues to use an old spectrum resource (namely, the fourth spectrum resource) for communication. FIG. 13 is a diagram of an example of resource use after spectrum resource configuration update. The server indicates the NTN to use a new spectrum resource (the third spectrum resource) for communication after the first time. The first time is the sum of the second time and the first guard time, that is, the first time is $t_0$+the guard time.

The TN uses the new spectrum resource for communication after $t_0$. In this case, a latest moment at which an interference signal before the moment $t_0$ reaches the NTN is $t_0+t_{max}$. NTN uses the new spectrum resource for communication before the moment $t_0+t_{max}$, spectrum occupied by the interference signal before the moment $t_0$ overlaps with a new spectrum used by the NTN, the NTN may be subject to interference. If the guard time is configured to be greater than or equal to $t_{max}$, $t_0$ +the guard time, which can avoid interference.

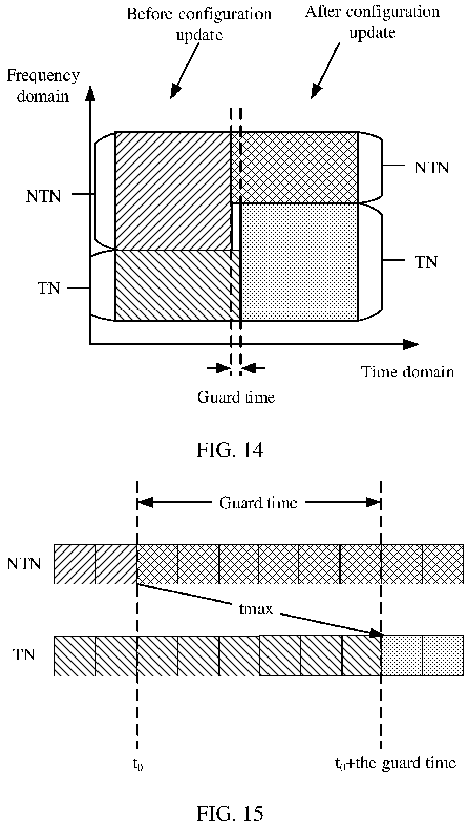

An example in which the first network is an NTN and the second network is a TN is used. FIG. 14 is another diagram of spectrum resource configuration update of the first network and the second network. The TN and the NTN share the first spectrum resource. A left side of a dashed line is a spectrum resource configuration situation before configuration update, and a right side of a dashed line is a spectrum resource configuration situation after configuration update. A spectrum resource currently configured for the NTN is less than a spectrum resource previously configured for the NTN, and a spectrum resource currently configured for the TN is more than a spectrum resource previously configured for the TN. Spectrum resource configuration update occurs at second time $t_0$, that is, the second time is an effective moment of the configuration of the server. The server may further indicate the second time to the TN and the NTN.

The server further indicates, to the TN, that first guard time guard time is greater than or equal to $t_{max}$. to

$t_{max}$ based on location information of a base station. In addition, after $t_0$, the NTN may use a new spectrum resource (namely, the second spectrum resource) for communication, and the TN continues to use an old spectrum resource (namely, the fourth spectrum resource) for communication. FIG. 15 is a diagram of another example of resource use after spectrum resource configuration update. The server indicates the TN to use a new spectrum resource (the third spectrum resource) for communication after the first time. The first time is the sum of the second time and the first guard time, that is, the first time is $t_0$+the guard time.

The NTN uses the new spectrum resource for communication after the moment $t_0$. In this case, a latest moment at which an interference signal before the moment $t_0$ reaches the TN is $t_0+t_{max.}$ $_0+t_{max}$, because a spectrum occupied by the interference signal before the moment $t_0$ overlaps with a new spectrum used by the TN, the TN may be subject to interference. If the guard time is configured to be greater than or equal to $t_{max}$, after $t_0$+the guard time, which can avoid interference.

For example, $t_{max}$ may be the maximum propagation delay from the first network to the second network.

The maximum propagation delay from the first network to the second network is associated with a maximum distance between coverage of a satellite cell and a satellite and a speed of light. For example, FIG. 16 is a diagram of satellite-terrestrial signal propagation. $t_{max} = d_{max}/c$ may be defined, where $d_{max}$ is a maximum distance between coverage of a satellite cell (corresponding to an edge point) and a satellite, and c is a speed of light.

According to the spectrum resource determining method provided in this embodiment of this application, in a scenario in which the first network and the second network share a spectrum resource, a configuration of guard time for the second network to use a new spectrum resource is specified. Through this configuration, interference between the first network and the second network can be avoided.

FIG. 17 is a schematic flowchart of still another spectrum resource determining method according to an embodiment of this application. In this embodiment, a third spectrum resource configured by a server for a second network is less than a fifth spectrum resource previously configured by the server for the second network. For example, the method may include the following steps.

S1701: The server sends second indication information to the second network; and correspondingly, the second network receives the second indication information.

The server respectively configures parts of a first spectrum resource for a first network and the second network, that is, the first network and the second network share the first spectrum resource. In different time periods, spectrum resources configured by the server for the second network may change. For example, in this embodiment, the third spectrum resource currently configured by the server for the second network is more than the fifth spectrum resource previously configured by the server (configured by using third configuration information) for the second network.

In this embodiment, frame-level synchronization between the first network and the second network is not required.

When the configuration of the server is updated, the server further needs to send the second indication information to the second network. The second indication information indicates the second network to use the third spectrum resource for communication before third time, the third time is a sum of the second time and second guard time, and the second guard time is less than or equal to a minimum propagation delay from the first network to the second network.

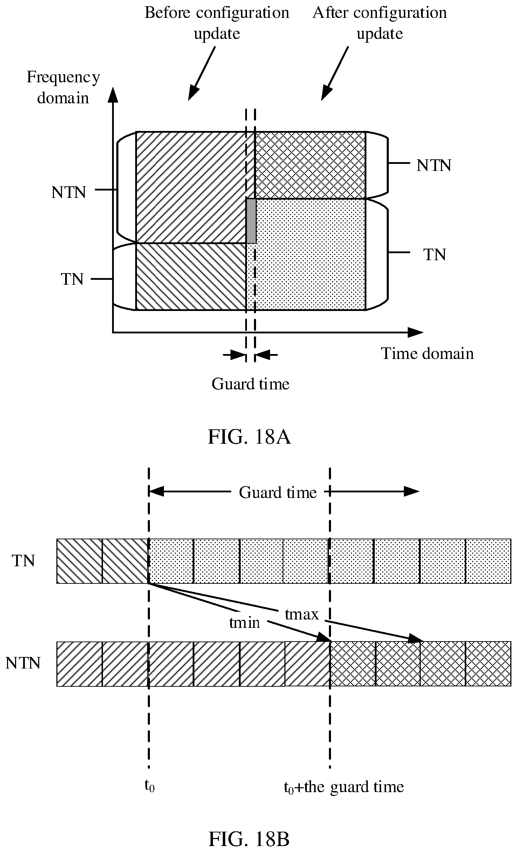

An example in which the first network is a TN and the second network is an NTN is used. FIG. 18A is another diagram of spectrum resource configuration update of the first network and the second network. The TN and the NTN share the first spectrum resource. A left side of a dashed line is a spectrum resource configuration situation before configuration update, and a right side of a dashed line is a spectrum resource configuration situation after configuration update. A spectrum resource currently configured for the TN is more than a spectrum resource previously configured for the TN, and a spectrum resource currently configured for the NTN is less than a spectrum resource previously configured for the NTN. Spectrum resource configuration update occurs at the second time $t_0$, that is, the second time is an effective moment of the configuration of the server. The server may further indicate the second time to the TN and the NTN.

The server further indicates, to the NTN, that second guard time guard time is less than or equal to $t_{min.}$ $t_{min}$ based on location information of a base station. In addition, after $t_0$, the TN may use a new spectrum resource (namely, the second spectrum resource) for communication, and the NTN continues to use an old spectrum resource (namely, the fifth spectrum resource) for communication. FIG. 18B is a diagram of another example of resource use after spectrum resource configuration update. The server indicates the NTN to use an old spectrum resource (the fifth spectrum resource) for communication before the third time, and use a new spectrum resource (the third spectrum resource) for communication after the third time. The third time is the sum of the second time and the second guard time, that is, the third time is $t_0$+the guard time.

The TN uses the new spectrum resource for communication after $t_0$. In this case, an earliest moment at which an interference signal after $t_0$ reaches the NTN is $t_0+t_{min}$. still uses the old spectrum resource for communication after the moment $t_0+t_{min}$, spectrum occupied by the interference signal after the moment $t_0$ overlaps with an old spectrum used by the NTN, the NTN may be subject to interference. If the guard time is configured to be less than or equal to $t_{min}$, that is, uses the new spectrum resource for communication, after $t_0$+the guard time, which can avoid interference.

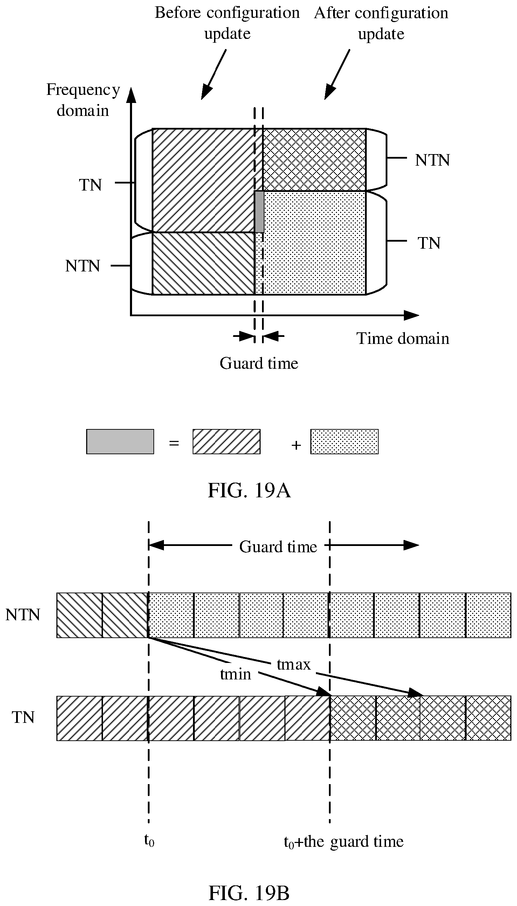

An example in which the first network is an NTN and the second network is a TN is used. FIG. 19A is another diagram of spectrum resource configuration update of the first network and the second network. The TN and the NTN share the first spectrum resource. A left side of a dashed line is a spectrum resource configuration situation before configuration update, and a right side of a dashed line is a spectrum resource configuration situation after configuration update. A spectrum resource currently configured for the NTN is more than a spectrum resource previously configured for the NTN, and a spectrum resource currently configured for the TN is less than a spectrum resource previously configured for the TN. Spectrum resource configuration update occurs at the second time $t_0$, that is, the second time is an effective moment of the configuration of the server. The server may further indicate the second time to the TN and the NTN.

The server further indicates, to the TN, that second guard time guard time is less than or equal to $t_{min}$. $t_{min}$ based on location information of a base station. In addition, after $t_0$, the NTN may use a new spectrum resource (namely, the second spectrum resource) for communication, and the TN continues to use an old spectrum resource (namely, the fifth spectrum resource) for communication. FIG. 19B is a diagram of another example of resource use after spectrum resource configuration update. The server indicates the TN to use an old spectrum resource (the fifth spectrum resource) for communication before the third time, and use a new spectrum resource (the third spectrum resource) for communication after the third time. The third time is the sum of the second time and the second guard time, that is, the third time is $t_0$+the guard time.

The NTN use the new spectrum resource for communication after $t_0$. In this case, an earliest moment at which an interference signal after $t_0$ reaches the TN is $t_0$ $+t_{min}$. uses the old spectrum resource for communication after $t_0+t_{min}$, the interference signal after $t_0$ overlaps with an old spectrum used by the TN, the TN may be subject to interference. If the guard time is configured to be less than or equal to $t_{min}$, the old spectrum resource for communication, that is, uses the new spectrum resource for communication, after $t_0$+the guard time, which can avoid interference.

For example, $t_{min}$ may be a minimum propagation delay from the first network to the second network.

The minimum propagation delay from the first network to the second network is associated with a minimum distance between coverage of the satellite cell and a satellite and a speed of light. For example, FIG. 16 is a diagram of satellite-terrestrial signal propagation. $t_{min}$ = $d_{min}/c$ may be defined, where $d_{min}$ is a minimum distance between coverage of a satellite cell (corresponding to a subsatellite point) and a satellite, and c is a speed of light.

According to the spectrum resource determining method provided in this embodiment of this application, a configuration of the guard time is specified. Through this configuration, interference between the first network and the second network can be avoided.

The configurations of the guard time and the guard band in the foregoing embodiments are network-level configurations. Cell-level configurations of the guard time and the guard band are described in the following embodiments.

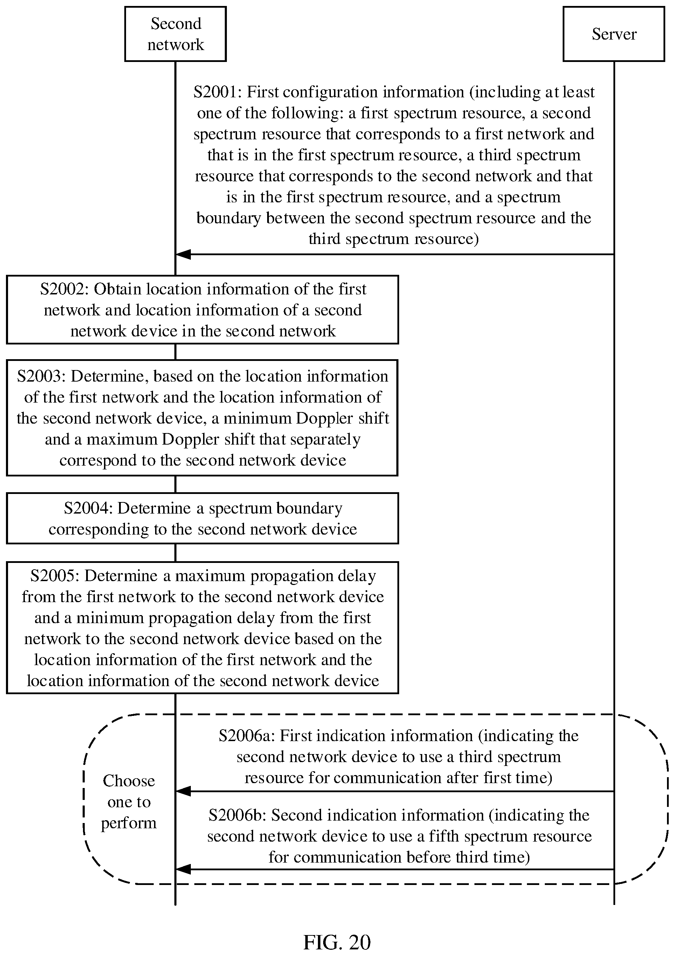

FIG. 20 is a schematic flowchart of still another spectrum resource determining method according to an embodiment of this application. For example, the method may include the following steps.

S2001: A server sends first configuration information to a second network; and correspondingly, the second network receives the first configuration information.

The first configuration information includes at least one of the following: a first spectrum resource, a second spectrum resource that corresponds to a first network and that is in the first spectrum resource, a third spectrum resource that corresponds to the second network and that is in the first spectrum resource, and a spectrum boundary between the second spectrum resource and the third spectrum resource.

For a specific implementation of this step, refer to step S801 shown in FIG. 8. Details are not described herein again.

S2002: The second network obtains location information of the first network and location information of a second network device in the second network.

The second network may include one or more second network devices. The first network and the second network share the first spectrum resource, the first network may cause interference to the second network, and interference caused by the first network to different second network devices in the second network may be different.

The second network first obtains the location information of the first network and the location information of the second network device.

For example, the server may indicate the location information of the first network to the second network, or the first network indicates the location information of the first network to the second network, so that the second network may obtain the location information of the first network.

The second network further obtains the location information of the second network device of the second network.

An example in which the first network is an NTN and the second network is a TN is used. First, ephemeris information of the NTN is obtained. The server may indicate the ephemeris information of the NTN to the TN, or the NTN indicates the ephemeris information of the NTN to the TN. Then, the location information of the first network at effective time $t_0$ of the first configuration information is calculated based on the ephemeris information of the NTN.

An example in which the first network is a TN, and the second network is an NTN is used. The server may indicate location information of the TN to the NTN, or the TN indicates the location information of the TN to the NTN.

S2003: The second network determines, based on the location information of the first network and the location information of the second network device, a minimum Doppler shift and a maximum Doppler shift that separately correspond to the second network device.

In the second network, spectrum resources occupied by different second network devices may be different, so that Doppler shifts generated by the first network for different second network devices may be different. The second network determines a minimum Doppler shift and a maximum Doppler shift that correspond to each second network device.

For example, the first network may include at least one first network device, and Doppler shifts generated by different first network devices for a same second network device may also be different. The maximum Doppler shift corresponding to the second network device is a maximum value in at least one maximum Doppler shift of the at least one first network device relative to the second network device, and the minimum Doppler shift corresponding to the second network device is a minimum value in at least one minimum Doppler shift of the at least one first network device relative to the second network device.

A guard band between the second spectrum resource and the third spectrum resource is greater than or equal to the maximum Doppler shift.

S2004: The second network determines a spectrum boundary corresponding to the second network device.

The first network may generate different Doppler shifts for different second network devices. In this case, the second network determines a spectrum boundary corresponding to each second network device. Specifically, there are the following two cases.

In a first case, if a center frequency of the third spectrum resource is higher than a center frequency of the second spectrum resource, a minimum frequency of the second network device is greater than or equal to a sum of the maximum Doppler shift corresponding to the second network device and the spectrum boundary between the second spectrum resource and the third spectrum resource.

In a second case, if a center frequency of the third spectrum resource is lower than a center frequency of the second spectrum resource, a maximum frequency corresponding to the second network device is less than or equal to a sum of the minimum Doppler shift corresponding to the second network device and the spectrum boundary between the second spectrum resource and the third spectrum resource.

S2005: The second network determines a maximum propagation delay from the first network to the second network device and a minimum propagation delay from the first network to the second network device based on the location information of the first network and the location information of the second network device.

If locations of second network devices are different, maximum propagation delays and minimum propagation delays from the first network to different second network devices may be different. The second network determines a maximum propagation delay and a minimum propagation delay from the first network to each second network device based on the location information of the first network and the location information of the second network device.

Further, if the first network includes at least one first network device, and location information of different first network devices is different, propagation delays from different first network devices to the second network device may be different. The maximum propagation delay from the first network to the second network device is a maximum value in at least one maximum propagation delay from the at least one first network device to the second network device separately. The minimum propagation delay from the first network to the second network device is a minimum value in at least one minimum propagation delay from the at least one first network device to the second network device separately.

An example in which the first network is an NTN and the second network is a TN is used. A maximum propagation delay from the NTN to a base station is equal to a minimum propagation delay from the NTN to the base station, where the maximum propagation delay and the minimum propagation delay each are $t_{\text{delay}}$. If the NTN includes a plurality of satellites, the maximum propagation delay from the NTN to the base station is a maximum value of a plurality of maximum propagation delays from the plurality of satellites in the NTN to the base station.

An example in which the first network is a TN and the second network is an NTN is used. A maximum propagation delay from the TN to a satellite base station is a corresponding propagation delay from a base station that is farthest from a satellite and that is within coverage of the NTN to the satellite base station. A minimum propagation delay from the TN to the satellite base station is a corresponding propagation delay from a base station that is closest to the satellite and that is within the coverage of the NTN to the satellite base station.

The server and the second network perform the following step S2006a or step S2006b based on a change before and after spectrum resource update.

S2006a: If the third spectrum resource is more than a fourth spectrum resource configured for the second network by using second configuration information, the server sends first indication information to the second network, where the first indication information indicates the second network device to use the third spectrum resource for communication after first time, the first time is a sum of second time and first guard time, and the first guard time is greater than or equal to the maximum propagation delay from the first network to the second network device.

S2006b: If the third spectrum resource is less than a fifth spectrum resource configured for the second network by using third configuration information, the server sends second indication information to the second network, where the second indication information indicates the second network device to use the fifth spectrum resource for communication before third time, the third time is a sum of the second time and second guard time, and the second guard time is less than or equal to the minimum propagation delay from the first network to the second network device.

It may be understood that the procedure (namely, step S2001 to step S2004) of configuring the cell-level guard band and the procedure (namely, step S2005 and step S2006a or step S2006b) of configuring the cell-level guard time may be jointly performed, or may be independently performed.

An example in which the first network is an NTN and the second network is a TN is used. The TN calculates, based on ephemeris information of the NTN and location information of each base station within coverage of the TN, $f_{\text{doppler}}^{\text{max}}$ and $f_{\text{doppler}}^{\text{min}}$ that correspond to each base station, where $f_{\text{doppler}}^{\text{max}}$ and $f_{\text{doppler}}^{\text{min}}$ that correspond to each base station are a maximum value and a minimum value of Doppler shifts corresponding to the base station. If the NTN includes a plurality of satellites, a maximum Doppler shift corresponding to the base station is a maximum value of maximum Doppler shifts of the plurality of satellites for the base station separately, and a minimum Doppler shift corresponding to the base station is a minimum value of minimum Doppler shifts of the plurality of satellites for the base station separately.

If a center frequency of a spectrum resource of the TN is higher than a center frequency of a spectrum resource of the NTN, a minimum frequency of the base station is greater than or equal to a sum of $f_{\text{doppler}}^{\text{max}}$ corresponding to the base station and a spectrum boundary $f_{\text{boundary}}$ between the spectrum resource of the TN and the spectrum resource of the NTN, that is, the minimum frequency of the base station is greater than or equal to $f_{\text{boundary}} + f_{\text{doppler}}^{\text{max}}$, and a guard band between a spectrum resource of the base station and the spectrum resource of the NTN is greater than or equal to $\left|f_{\text{doppler}}^{\text{max}}\right|$ corresponding to the base station, that is, the guard band is greater than or equal to $\left|f_{\text{doppler}}^{\text{max}}\right|$.

If a center frequency of a spectrum resource of the TN is lower than a center frequency of a spectrum resource of the NTN, a maximum frequency of the base station is less than or equal to a sum of $f_{\text{doppler}}^{\text{min}}$ corresponding to the base station and a spectrum boundary $f_{\text{boundary}}$ between the spectrum resource of the TN and the spectrum resource of the NTN, that is, the maximum frequency of the base station is less than or equal to $f_{\text{boundary}} + f_{\text{doppler}}^{\text{min}}$, and a guard band between a spectrum resource of the base station and the spectrum resource of the NTN is greater than or equal to $\left|f_{\text{doppler}}^{\text{min}}\right|$ corresponding to the base station, that is, the guard band is greater than or equal to $\left|f_{\text{doppler}}^{\text{min}}\right|$.

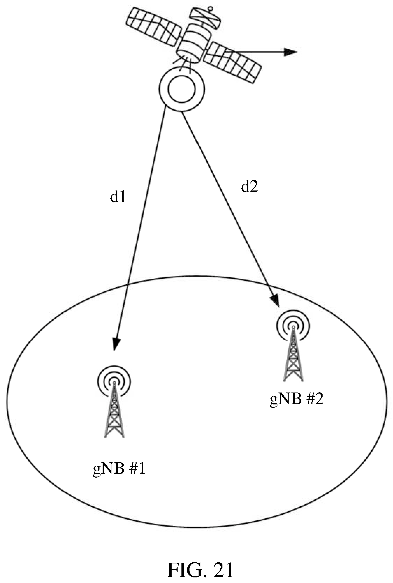

For example, FIG. 21 is a diagram of another example of determining a spectrum resource. It is assumed that a satellite flies from left to right, and there are two terrestrial base stations in a coverage area: a gNB #1 and a gNB #2. At $t_0$, a distance between the gNB #1 and the satellite and a distance between the gNB #2 and the satellite are respectively $d_1$ and $d_2$. For the gNB #1, $t_{\text{delay}}$ = $d_1/c$. For the gNB #2, $t_{\text{delay}} = d_2/c$.

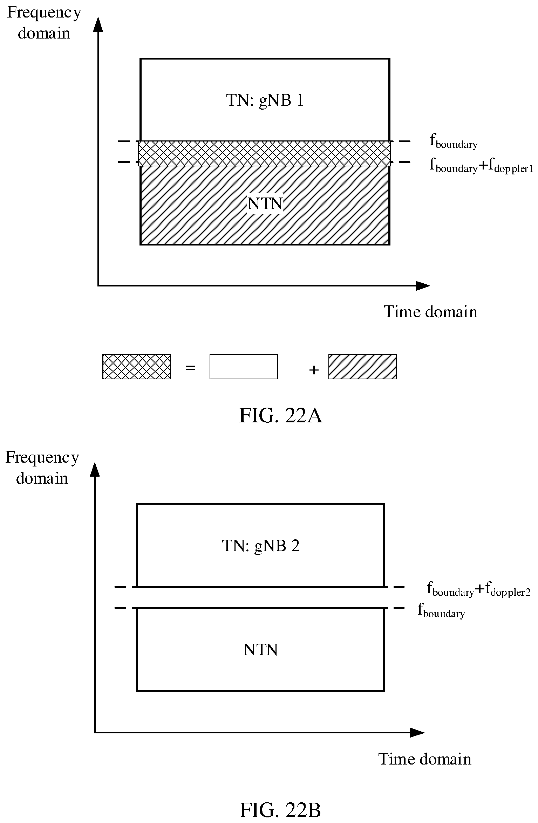

A Doppler shift $f_{\text{doppler1}}$ of the gNB #1 is less than 0 (the satellite is far away from the gNB #1). A Doppler shift $f_{\text{doppler2}}$ of the gNB #2 is greater than 0 (the satellite is close to the gNB #2). FIG. 22A is a diagram of an example of determining a spectrum resource in a scenario in which a satellite interferes with a terrestrial base station. If a center frequency of a spectrum resource of a gNB #1 is higher than a center frequency of a spectrum resource of an NTN, a spectrum boundary corresponding to the gNB #1 is greater than or equal to $f_{\text{boundary}} + f_{\text{doppler1}}$. FIG. 22B is a diagram of another example of determining a spectrum resource in a scenario in which a satellite interferes with a terrestrial base station. If a center frequency of a spectrum resource of a gNB #2 is higher than a center frequency of a spectrum resource of an NTN, a spectrum boundary corresponding to the gNB #2 is greater than or equal to $f_{\text{boundary}} + f_{\text{doppler2}}$.

The foregoing considers the scenario in which the NTN interferes with the TN For each gNB in the TN, an interference source is from a satellite. Therefore, after the TN obtains ephemeris information of the NTN, each gNB may calculate a propagation delay $t_{\text{delay}} = t_{max} = t_{min}$ from the gNB to the interference source satellite and a Doppler shift $f_{doppler} = f_{doppler}^{max} = f_{doppler}^{min}$. Guard time is configured to be greater than or equal to $t_{\text{delay}}$ or the guard time is configured to less than or equal to $t_{delay}$, be avoided during spectrum resource allocation update. A spectrum boundary is configured to be greater than or equal to $f_{boundary} + f_{doppler}$ or the spectrum boundary is configured to be less than or equal to $f_{boundary} + f_{doppler}$, be avoided, thereby avoiding interference between the TN and the NTN. Compared with the network-level configurations, the cell-level configurations of the guard time and the guard band further improve resource utilization.

An example in which the first network is a TN and the second network is an NTN is used. The NTN calculates, based on location information of each base station in the TN within coverage of the NTN and ephemeris information of the NTN, a distance from each base station to a satellite at $t_0$ (the effective time of the first configuration information), determines $t_{max}$ and $t_{min}$, $t_{max}$ and $t_{min}$ are respectively a propagation delay corresponding to a base station that is farthest from the satellite and a propagation delay corresponding to a base station that is closest to the satellite within the coverage of the NTN, and then configures guard time to be greater than or equal to $t_{max}$ or the guard time to be less than or equal to $t_{min}$.

The NTN calculates, based on the location information of each base station in the TN within the coverage of the NTN and the ephemeris information of the NTN, $f_{\mathrm{doppler}}^{\max}$ and $f_{\mathrm{doppler}}^{\min}$ that correspond to each satellite base station, where $f_{\mathrm{doppler}}^{\max}$ and $f_{\mathrm{doppler}}^{\min}$ are respectively a maximum value and a minimum value in a Doppler shift corresponding to the satellite base station.

Further, if the TN includes a plurality of base stations, a maximum Doppler shift corresponding to the satellite base station is a maximum value of a plurality of maximum Doppler shifts of the plurality of base stations relative to the satellite base station, and a minimum Doppler shift corresponding to the satellite base station is a minimum value of a plurality of minimum Doppler shifts of the plurality of base stations relative to the satellite base station.

If a center frequency of a spectrum resource of the NTN is higher than a center frequency of a spectrum resource of the TN, a minimum frequency of the satellite base station is greater than or equal to a sum of $f_{\mathrm{doppler}}^{\max}$ corresponding to the satellite base station and a spectrum boundary $f_{boundary}$ between the spectrum resource of the NTN and the spectrum resource of the TN, that is, the minimum frequency of the satellite base station is greater than or equal to $f_{\mathrm{boundary}} + f_{\mathrm{doppler}}^{\max}$ $f_{boundary}$ and a guard band between a spectrum resource of the satellite base station and the spectrum resource of the TN is greater than or equal to $f_{\mathrm{doppler}}^{\max}$ corresponding to the satellite base station, that is, the guard band is greater than or equal to $f_{\mathrm{doppler}}^{\max}$.

If a center frequency of a spectrum resource of the NTN is lower than a center frequency of a spectrum resource of the TN, a maximum frequency of the satellite base station is less than or equal to a sum of $f_{\mathrm{doppler}}^{\min}$ corresponding to the satellite base station and a spectrum boundary $f_{boundary}$ between the spectrum resource of the NTN and the spectrum resource of the TN, that is, the maximum frequency of the satellite base station is less than or equal to $f_{boundary} + f_{\mathrm{doppler}}^{\min}$, and a guard band between the spectrum resource of the NTN and the spectrum resource of the TN is greater than or equal to $\left| f_{\mathrm{doppler}}^{\min} \right|$, that is, the guard band is greater than or equal to $\left| f_{\mathrm{doppler}}^{\min} \right|$.

Still with reference to FIG. 21, a satellite flies from left to right, and there are two terrestrial base stations within a coverage area: a gNB #1 and a gNB #2. At $t_0$, a distance between the gNB #1 and the satellite and a distance between the gNB #2 and the satellite are respectively $d_1$ and $d_2$. For the NTN, $t_{max} = d_1/c$, and $t_{min} = d_2/c$.

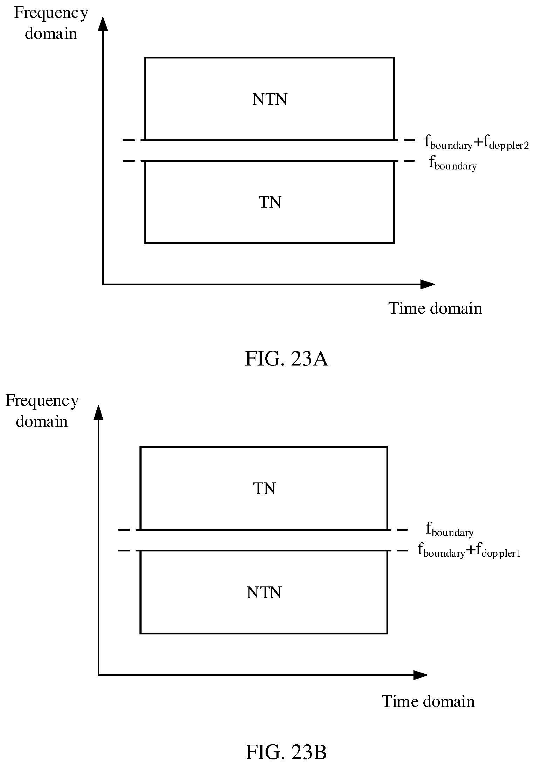

A Doppler shift $f_{doppler1}$ of the gNB #1 relative to the NTN is less than 0 (the satellite is far away from the gNB #1). A Doppler shift $f_{doppler2}$ of the gNB #2 relative to the NTN is greater than 0 (the satellite is close to the gNB #2). For the NTN, $f_{\mathrm{doppler}}^{\min} = f_{\mathrm{doppler1}}$, and $f_{\mathrm{doppler}}^{\max} = f_{\mathrm{doppler2}}$. FIG. 23A is a diagram of an example of determining a spectrum resource in a scenario in which a terrestrial base station within satellite coverage interferes with a satellite base station. If a center frequency of the satellite base station is higher than a center frequency of a TN, a spectrum boundary of the satellite base station is greater than or equal to $f_{boundary} + f_{doppler2}$. FIG. 23B is a diagram of another example of determining a spectrum resource in a scenario in which a terrestrial base station within satellite coverage interferes with a satellite base station. If a center frequency of the satellite base station is lower than a center frequency of a TN, a spectrum boundary of the satellite base station is less than or equal to $f_{boundary} + f_{doppler1}$.

The foregoing considers the scenario in which the TN interferes with the NTN. For the NTN, an interference source is from all base stations within coverage of the NTN. Therefore, after the NTN obtains location information of each base station in the TN, the NTN may determine a propagation delay $t_{max}$ corresponding to a base station that is farthest from a satellite and a propagation delay $t_{min}$ corresponding to a base station that is closest to the satellite within coverage of the NTN, and a maximum value $f_{doppler}^{max}$ and a minimum value $f_{doppler}^{min}$ of Doppler shifts corresponding to all the base stations within the coverage. Guard time is configured to be greater than or equal to $t_{max}$ or the guard time is configured to less than or equal to $t_{min}$, interference between the TN and the NTN can be avoided during spectrum resource allocation update. A spectrum boundary is configured to be greater than or equal to

$$f_{boundary} + f_{doppler}^{max} \; f_{boundary}$$ or the spectrum boundary is configured to be less than or equal to

$$f_{boundary} + f_{doppler}^{min} \; f_{boundary}$$ so that spectrum overlapping caused by a Doppler shift can be avoided, thereby avoiding interference between the TN and the NTN. Compared with the network-level configurations, the cell-level configurations of the guard time and the guard band further improve resource utilization.

According to the spectrum resource determining method provided in this embodiment of this application, in a scenario in which the first network and the second network share a spectrum resource, guard time and a guard band are configured at a cell level, thereby improving resource utilization.

It may be understood that, in the foregoing embodiments, the method and/or steps implemented by the second network may alternatively be implemented by a component (for example, a chip or a circuit) that can be used in the second network. The method and/or steps implemented by the server may alternatively be implemented by a component (for example, a chip or a circuit) that can be used in the server.

The foregoing mainly describes the solutions provided in embodiments of this application from a perspective of interaction between nodes. Correspondingly, an embodiment of this application further provides a spectrum resource determining apparatus. The spectrum resource determining apparatus is configured to implement the foregoing methods. The spectrum resource determining apparatus may be the second network in the foregoing method embodiments, or may be a component that can be used in the second network. Alternatively, the spectrum resource determining apparatus may be the server in the foregoing method embodiments, or may be a component that can be used in the server. It may be understood that, to implement the foregoing functions, the spectrum resource determining apparatus includes a corresponding hardware structure and/or software module for performing the functions. A person skilled in the art should easily be aware that, in combination with units and algorithm steps of the examples described in embodiments disclosed in this specification, this application may be implemented by hardware or a combination of the hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the spectrum resource determining apparatus may be divided into functional modules based on the foregoing method embodiments. For example, each functional module may be divided based on each corresponding function, or two or more functions may be integrated into one processing unit. The integrated module may be implemented in a form of hardware, or may be implemented in a form of a software functional module. It should be noted that, in embodiments of this application, module division is an example, and is merely a logical function division. In actual implementation, another division manner may be used.

Based on a same concept as the foregoing spectrum resource determining method, this application further provides the following spectrum resource determining apparatus.

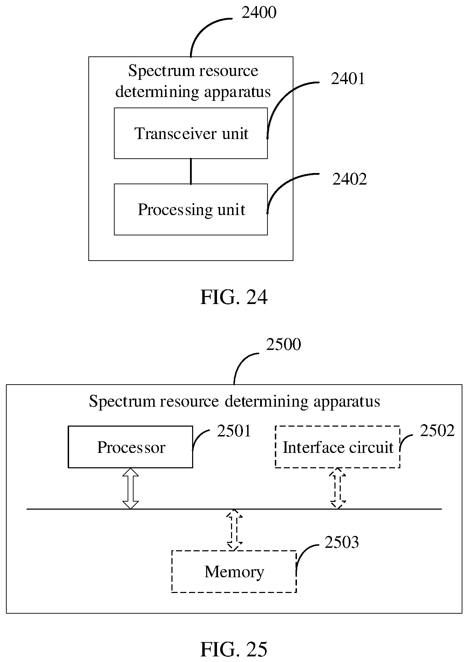

FIG. 24 is a diagram of a structure of a spectrum resource determining apparatus according to an embodiment of this application. The spectrum resource determining apparatus 2400 includes a transceiver unit 2401 and a processing unit 2402.

When the spectrum resource determining apparatus is configured to implement the function of the second network in the foregoing method embodiments, the transceiver unit 2401 is configured to perform the operation of the second network in S801 in the embodiment shown in FIG. 8, and the processing unit 2402 is configured to perform the operation in S802 in the embodiment shown in FIG. 8; or the transceiver unit 2401 is configured to perform the operation of the second network in S1101 in the embodiment shown in FIG. 11; or the transceiver unit 2401 is configured to perform the operation of the second network in S1701 in the embodiment shown in FIG. 17; or the transceiver unit 2401 is configured to perform the operations of the second network in S2001 and S2006a or S2006b in the embodiment shown in FIG. 20, and the processing unit 2402 is configured to perform the operations in S2002 to S2005 in the embodiment shown in FIG. 20.

When the spectrum resource determining apparatus is configured to implement the function of the server in the foregoing method embodiments, the transceiver unit 2401 is configured to perform the operation of the server in S801 in the embodiment shown in FIG. 8; or the transceiver unit 2401 is configured to perform the operation of the server in S1101 in the embodiment shown in FIG. 11; or the transceiver unit 2401 is configured to perform the operation of the server in S1701 in the embodiment shown in FIG. 17; or the transceiver unit 2401 is configured to perform the operations of the server in S2001 and S2006a or S2006b in the embodiment shown in FIG. 20.

For specific implementations of the transceiver unit 2401 and the processing unit 2402, refer to the descriptions in the foregoing method embodiments.

FIG. 25 is a diagram of a structure of another spectrum resource determining apparatus according to an embodiment of this application. The spectrum resource determining apparatus 2500 includes one or more processors 2501 (one processor is used as an example in the figure). Optionally, the spectrum resource determining apparatus 2500 may further include a memory 2503 (represented by a dashed line in the figure). The memory 2503 is configured to store instructions executed by the processor 2501, store input data needed by the processor 2501 to run the instructions, or store data generated by running the instructions by the processor 2501. Optionally, the spectrum resource determining apparatus 2500 may further include an interface circuit 2502 (represented by a dashed line in the figure), and the processor 2501 and the interface circuit 2502 are coupled to each other. It may be understood that, the interface circuit 2502 may be a transceiver or an input/output interface. The processor 2501 is configured to implement the function of the processing unit 2402 in the embodiment shown in FIG. 24, and the interface circuit 2502 is configured to implement the function of the transceiver unit 2401 in the embodiment shown in FIG. 24.

When the spectrum resource determining apparatus is a chip used in the second network, the chip implements the function of the second network in the foregoing method embodiments. The chip receives information from another module (for example, a radio frequency module or an antenna) in the second network, where the information is sent by the server to the second network; or the chip sends information to another module (for example, a radio frequency module or an antenna) in the second network, where the information is sent by the second network to the server.

When the spectrum resource determining apparatus is a chip used in the server, the chip implements the function of the server in the foregoing method embodiments. The chip receives information from another module (for example, a radio frequency module or an antenna) in the server, where the information is sent by the second network to the server; or the chip sends information to another module (for example, a radio frequency module or an antenna) in the server, where the information is sent by the server to the second network.

In addition, it should be noted that, the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

In this application, division of the modules is an example, and is merely logical function division. During actual implementation, there may be another division manner. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is caused to perform the method in the foregoing embodiments.

An embodiment of this application further provides a spectrum resource determining system, including the foregoing spectrum resource determining apparatus.

An embodiment of this application further provides a circuit. The circuit is coupled to a memory, and the circuit is configured to perform the method shown in the foregoing embodiments. The circuit may include a chip circuit.

When the spectrum resource determining apparatus is a module used in a base station, the module in the base station implements a function of the base station in the foregoing method embodiments. The module in the base station receives information from another module (for example, a radio frequency module or an antenna) in the base station, where the information is sent by the second network to the base station; or the module in the base station sends information to another module (for example, a radio frequency module or an antenna) in the base station, where the information is sent by the base station to the second network. The module in the base station herein may be a baseband chip of the base station, a CU, a DU, or another module, or may be an apparatus in an open radio access network (open radio access network, O-RAN) architecture, for example, an apparatus like an open CU or an open DU.

It should be noted that one or more of the foregoing units or units may be implemented by software, hardware, or a combination of the software and the hardware. When any one of the foregoing modules or units is implemented by software, the software exists in a form of computer program instructions, and is stored in the memory. The processor may be configured to execute the program instructions and implement the foregoing method procedure.

In this application, the processor may be a general-purpose processor, a digital signal processor, an application specific integrated circuit, a field programmable gate array or another programmable logic device, a discrete gate or a transistor logic device, a discrete hardware component, or all or a part of circuits in the foregoing device that are configured to implement a processing function, and may implement or perform the methods, steps, and logical block diagrams disclosed in this application. The general-purpose processor may be a microprocessor or any regular processor or the like. The steps of the methods disclosed with reference to this application may be directly implemented by a hardware processor, or may be implemented by a combination of hardware and a software module in a processor.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedure.

Optionally, an embodiment of this application further provides a chip system, including at least one processor and an interface. The at least one processor is coupled to a memory through the interface. When the at least one processor executes a computer program or instructions in the memory, the chip system is caused to perform the method in any one of the foregoing method embodiments. Optionally, the chip system may include a chip, or may include the chip and another discrete device. This is not specifically limited in this embodiment of this application.

Alternatively, the memory in this application may be a circuit or any other apparatus that can implement a storage function, and is configured to store program instructions and/or data. The memory is any other medium that can carry or store expected program code in a form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or the memory may be a volatile memory (volatile memory), for example, a random-access memory (random-access memory, RAM).

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, a term such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

**Claims**

1. A spectrum resource determining method, comprising:

   receiving first configuration information, wherein the first configuration information comprises at least one of the following: a first spectrum resource, a second spectrum resource that corresponds to a first network and that is in the first spectrum resource, a third spectrum resource that corresponds to a second network and that is in the first spectrum resource, a spectrum boundary between the second spectrum resource and the third spectrum resource, a minimum Doppler shift, and a maximum Doppler shift; and
   determining a spectrum boundary corresponding to the second network, wherein if a center frequency of the third spectrum resource is higher than a center frequency of the second spectrum resource, a minimum frequency of the second network is greater than or equal to a sum of the maximum Doppler shift and the spectrum boundary between the second spectrum resource and the third spectrum resource; or if a center frequency of the third spectrum resource is lower than a center frequency of the second spectrum resource, a maximum frequency of the second network is less than or equal to a sum of the minimum Doppler shift and the spectrum boundary between the second spectrum resource and the third spectrum resource.

2. The method according to claim 1, wherein a guard band between the second spectrum resource and the third spectrum resource is greater than or equal to the maximum Doppler shift.

3. The method according to claim 1 or 2, wherein the method further comprises:

   if the third spectrum resource is more than a fourth spectrum resource configured for the second network by using second configuration information, receiving first indication information, wherein the first indication information indicates the second network to use the third spectrum resource for communication after first time, the first time is a sum of second time and first guard time, and the first guard time is greater than or equal to a maximum propagation delay from the first network to the second network; or
   if the third spectrum resource is less than a fifth spectrum resource configured for the second network by using third configuration information, receiving second indication information, wherein the second indication information indicates the second network to use the fifth spectrum resource for communication before third time, the third time is a sum of the second time and second guard time, and the second guard time is less than or equal to a minimum propagation delay from the first network to the second network; and
   the second time is an effective moment of the first configuration information.

4. The method according to claim 3, wherein the first network is a terrestrial network, and the second network is a satellite network; or the first network is a satellite network, and the second network is a terrestrial network;

   the maximum propagation delay from the first network to the second network is associated with a maximum distance between coverage of a satellite cell and a satellite and a speed of light; and

the minimum propagation delay from the first network to the second network is associated with a minimum distance between the coverage of the satellite cell and the satellite and the speed of light.

5. The method according to any one of claims 1 to 4, wherein the maximum Doppler shift and the minimum Doppler shift are associated with a carrier frequency, a moving speed of a satellite, a speed of light, a geocentric angle, an earth radius, and an orbital altitude of the satellite.

6. A spectrum resource determining method, comprising:

sending first configuration information, wherein the first configuration information comprises at least one of the following: a first spectrum resource, a second spectrum resource that corresponds to a first network and that is in the first spectrum resource, a third spectrum resource that corresponds to a second network and that is in the first spectrum resource, a spectrum boundary between the second spectrum resource and the third spectrum resource, a minimum Doppler shift, and a maximum Doppler shift.

7. The method according to claim 6, wherein a guard band guard band between the second spectrum resource and the third spectrum resource is greater than or equal to the maximum Doppler shift.

8. The method according to claim 6 or 7, wherein the method further comprises:

if the third spectrum resource is more than a fourth spectrum resource configured for the second network by using second configuration information, sending first indication information, wherein the first indication information indicates the second network to use the third spectrum resource for communication after first time, the first time is a sum of second time and first guard time, and the first guard time is greater than or equal to a maximum propagation delay from the first network to the second network; or
if the third spectrum resource is less than a fifth spectrum resource configured for the second network by using third configuration information, sending second indication information, wherein the second indication information indicates the second network to use the fifth spectrum resource for communication before third time, the third time is a sum of the second time and second guard time, and the second guard time is less than or equal to a minimum propagation delay from the first network to the second network; and

the second time is an effective moment of the first configuration information.

9. The method according to claim 8, wherein the first network is a terrestrial network, and the second network is a satellite network; or the first network is a satellite network, and the second network is a terrestrial network;

the maximum propagation delay from the first network to the second network is associated with a maximum distance between coverage of a satellite cell and a satellite and a speed of light; and
the minimum propagation delay from the first network to the second network is associated with a minimum distance between the coverage of the satellite cell and the satellite and the speed of light.

10. The method according to any one of claims 6 to 9, wherein the maximum Doppler shift and the minimum Doppler shift are associated with a carrier frequency, a moving speed of a satellite, a speed of light, a geocentric angle, an earth radius, and an orbital altitude of the satellite.

11. A spectrum resource determining method, comprising:

receiving first configuration information, wherein the first configuration information comprises at least one of the following: a first spectrum resource, a second spectrum resource that corresponds to a first network and that is in the first spectrum resource, a third spectrum resource that corresponds to a second network and that is in the first spectrum resource, and a spectrum boundary between the second spectrum resource and the third spectrum resource;
obtaining location information of the first network and location information of a second network device in the second network;
determining, based on the location information of the first network and the location information of the second network device, a minimum Doppler shift and a maximum Doppler shift that separately correspond to the second network device; and
determining a spectrum boundary corresponding to the second network device, wherein if a center frequency of the third spectrum resource is higher than a center frequency of the second spectrum resource, a minimum frequency of the second network device is greater than or equal to a sum of the maximum Doppler shift corresponding to the second network device and the spectrum boundary between the second spectrum resource and the third spectrum resource; or if a center frequency of the third spectrum resource is lower than a center frequency of the second spectrum resource, a maximum frequency corresponding to the second network device is less than or equal to a sum of the minimum Doppler shift corresponding to the second network device and the spectrum boundary between the second spectrum resource and the third spectrum resource.

12. The method according to claim 11, wherein the first network comprises at least one first network device, and the maximum Doppler shift is a maximum value in at least one maximum Doppler shift of the at least one first network device relative to the second network device; and
the minimum Doppler shift is a minimum value in at least one minimum Doppler shift of the at least one first network device relative to the second network device.

13. The method according to claim 11 or 12, wherein the method further comprises:

determining, based on the location information of the first network and the location information of the second network device, a maximum propagation delay from the first network to the second network device and a minimum propagation delay from the first network to the second network device; and
if the third spectrum resource is more than a fourth spectrum resource configured for the second network by using second configuration information, receiving first indication information, wherein the first indication information indicates the second network device to use the third spectrum resource for communication after first time, the first time is a sum of second time and first guard time, and the first guard time is greater than or equal to the maximum propagation delay from the first network to the second network device; or
if the third spectrum resource is less than a fifth spectrum resource configured for the second network by using third configuration information, receiving second indication information, wherein the second indication information indicates the second network device to use the fifth spectrum resource for communication before third time, the third time is a sum of the second time and second guard time, and the second guard time is less than or equal to the minimum propagation delay from the first network to the second network device; and
the second time is an effective moment of the first configuration information.

14. The method according to claim 13, wherein the first network comprises at least one first network device, and the maximum propagation delay from the first network to the second network device is a maximum value in at least one maximum propagation delay from the at least one first network device to the second network device separately; and
the minimum propagation delay from the first network to the second network device is a minimum value in at least one minimum propagation delay from the at least one first network device to the second network device separately.

15. A spectrum resource determining method, comprising:

sending first configuration information, wherein the first configuration information comprises at least one of the following: a first spectrum resource, a second spectrum resource that corresponds to a first network and that is in the first spectrum resource, a third spectrum resource that corresponds to a second network and that is in the first spectrum resource, and a spectrum boundary between the second spectrum resource and the third spectrum resource; and
if the third spectrum resource is more than a fourth spectrum resource configured for the second network by using second configuration information, sending first indication information, wherein the first indication information indicates a second network device in the second network to use the third spectrum resource for communication after first time, the first time is a sum of second time and first guard time, and the first guard time is greater than or equal to a maximum propagation delay from the first network to the second network device; or
if the third spectrum resource is less than a fifth spectrum resource configured for the second network by using third configuration information, sending second indication information, wherein the second indication information indicates the second network device to use the fifth spectrum resource for communication before third time, the third time is a sum of the second time and second guard time, and the second guard time is less than or equal to a minimum propagation delay from the first network to the second network device; and
the second time is an effective moment of the first configuration information.

16. The method according to claim 15, wherein the first network comprises at least one first network device, and the maximum Doppler shift is a maximum value in at least one maximum Doppler shift of the at least one first network device relative to the second network device; and

the minimum Doppler shift is a minimum value in at least one minimum Doppler shift of the at least one first network device relative to the second network device.

17. The method according to claim 15 or 16, wherein the first network comprises at least one first network device, and the maximum propagation delay from the first network to the second network device is a maximum value in at least one maximum propagation delay from the at least one first network device to the second network device separately; and

the minimum propagation delay from the first network to the second network device is a minimum value in at least one minimum propagation delay from the at least one first network device to the second network device separately.

18. A spectrum resource determining apparatus, wherein the apparatus comprises a module configured to perform the method according to any one of claims 1 to 17.

19. A spectrum resource determining system, comprising a first spectrum resource determining apparatus and a second spectrum resource determining apparatus, wherein the first spectrum resource determining apparatus is configured to perform the method according to any one of claims 1 to 5 or the method according to any one of claims 11 to 14, and the second spectrum resource determining apparatus is configured to perform the method according to any one of claims 6 to 10 or the method according to any one of claims 15 to 17.

20. A spectrum resource determining apparatus, comprising a memory, a processor, and a computer program that is stored in the memory and that is runnable on the processor, wherein when executing the computer program, the processor implements the method according to any one of claims 1 to 17.

21. A computer-readable storage medium, wherein the computer-readable storage medium stores a computer program or instructions, and when the computer program or the instructions are executed, the method according to any one of claims 1 to 17 is performed.

22. A computer program product, wherein the computer program product comprises related program instructions, and when the related program instructions are executed, the method according to any one of claims 1 to 17 is implemented.

FIG. 1

Satellite or uncrewed
aerial vehicle platform

Feeder link

Service link

Gateway

Data
network

FIG. 2A

Satellite or
uncrewed aerial
vehicle platform

Satellite or
uncrewed aerial
vehicle platform

Inter-satellite
link

Feeder link

Service link

Feeder link

Data
network

Gateway

FIG. 2B

Satellite 1                                               Satellite 2

Coverage of the satellite 1                               Coverage of the satellite 2

FIG. 3A

Satellite

Coverage of the
satellite

Visible range of
the satellite

FIG. 3B

FIG. 4

| NR PUCCH | NR PUCCH | NR PUCCH | NR PUCCH |
|---|---|---|---|
| LTE PUCCH | LTE PUCCH | LTE PUCCH | LTE PUCCH |

Column 1:
- NR PRACH
- NR PUSCH | NR SRS
- LTE PUSCH
- LTE PRACH

Column 2:
- NR PUSCH | LTE SRS
- LTE PUSCH

Column 3:
- NR PRACH
- NR PUSCH | NR SRS
- LTE PUSCH
- LTE PRACH

Column 4:
- NR PUSCH | LTE SRS
- LTE PUSCH

| LTE PUCCH | LTE PUCCH | LTE PUCCH | LTE PUCCH |
|---|---|---|---|
| NR PUCCH | NR PUCCH | NR PUCCH | NR PUCCH |

Frequency domain

Time domain

FIG. 5

EP 4 779 899 A1

FIG. 6

EP 4 779 899 A1

Frequency
domain

Spectrum
resource
(RBs)

NTN minimum
resource limit

NTN control signal

NTN
resource

TN
resource

Guard band

Guard time

TN minimum resource limit

TN
control
signal

Time domain

Optional
stage

FIG. 7

| Second network | | Server |
| --- | --- | --- |

S801: First configuration information (including at least one of the following: a first spectrum resource, a second spectrum resource that corresponds to a first network and that is in the first spectrum resource, a third spectrum resource that corresponds to the second network and that is in the first spectrum resource, a spectrum boundary between the second spectrum resource and the third spectrum resource, a minimum Doppler shift, and a maximum Doppler shift)

S802: Determine a spectrum boundary corresponding to the second network

FIG. 8

FIG. 9

FIG. 10A

Frequency
domain

TN

$f_{boundary}$

$f_{boundary}+f_{doppler\_min}$

NTN

Time domain

FIG. 10B

Second
network

Server

S1101: First indication information (indicating the
second network to use a third spectrum resource for
communication after first time)

FIG. 11

Before configuration
update

After configuration
update

Frequency
domain

TN

TN

NTN

NTN

Guard time

Time domain

FIG. 12

Guard time

TN

tmax

NTN

$t_0$

$t_0$+the guard time

FIG. 13

FIG. 14

FIG. 15

FIG. 16

S1701: Second indication information (indicating the second network to use a third spectrum resource for communication before third time)

FIG. 17

Before configuration
update

After configuration
update

Frequency
domain

NTN

NTN

TN

TN

Time domain

Guard time

FIG. 18A

Guard time

TN

tmax

tmin

NTN

$t_0$

$t_0$+the guard time

FIG. 18B

Before configuration update  After configuration update

Frequency domain

TN

NTN

NTN

TN

Guard time

Time domain

⬜ = ▨ + ⬚

FIG. 19A

Guard time

NTN

TN

tmin  tmax

$t_0$  $t_0$+the guard time

FIG. 19B

```
  ┌──────────┐                                              ┌──────────┐
  │  Second  │                                              │  Server  │
  │ network  │                                              │          │
  └──────────┘                                              └──────────┘
```

S2001: First configuration information (including at least one of the following: a first spectrum resource, a second spectrum resource that corresponds to a first network and that is in the first spectrum resource, a third spectrum resource that corresponds to the second network and that is in the first spectrum resource, and a spectrum boundary between the second spectrum resource and the third spectrum resource)

S2002: Obtain location information of the first network and location information of a second network device in the second network

S2003: Determine, based on the location information of the first network and the location information of the second network device, a minimum Doppler shift and a maximum Doppler shift that separately correspond to the second network device

S2004: Determine a spectrum boundary corresponding to the second network device

S2005: Determine a maximum propagation delay from the first network to the second network device and a minimum propagation delay from the first network to the second network device based on the location information of the first network and the location information of the second network device

Choose one to perform

S2006a: First indication information (indicating the second network device to use a third spectrum resource for communication after first time)

S2006b: Second indication information (indicating the second network device to use a fifth spectrum resource for communication before third time)

FIG. 20

FIG. 21

Frequency
domain

TN: gNB 1

— — $f_{boundary}$
— — $f_{boundary}+f_{doppler1}$

NTN

Time domain

▨ = □ + ▧

FIG. 22A

Frequency
domain

TN: gNB 2

— — $f_{boundary}+f_{doppler2}$
— — $f_{boundary}$

NTN

Time domain

FIG. 22B

FIG. 23A

FIG. 23B

2400

Spectrum resource
determining apparatus — 2401

Transceiver unit

— 2402

Processing unit

FIG. 24

2500

Spectrum resource determining apparatus

Processor — 2501

Interface circuit — 2502

— 2503

Memory

FIG. 25

## INTERNATIONAL SEARCH REPORT

| International application No. |
| --- |
| **PCT/CN2024/114055** |

**A. CLASSIFICATION OF SUBJECT MATTER**

H04B 7/185(2006.01)i

According to International Patent Classification (IPC) or to both national classification and IPC

**B. FIELDS SEARCHED**

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; 3GPP; IEEE; CNKI: 地面网络, 非地面网络, 频率, 频谱, 频带, 边界, 多普勒, 最大, 最小, 干扰, 定时提前, 间隔, NT, NTN, frequency, Doppler, maximum, minimum, inference, TA, interval

**C. DOCUMENTS CONSIDERED TO BE RELEVANT**

| Category* | Citation of document, with indication, where appropriate, of the relevant passages | Relevant to claim No. |
| --- | --- | --- |
| X | CN 115581127 A (APPLE INC.) 06 January 2023 (2023-01-06)<br>description, paragraphs [0024]-[0187] | 6, 18, 20-22 |
| X | CN 111615186 A (HUAWEI TECHNOLOGIES CO., LTD.) 01 September 2020 (2020-09-01)<br>description, paragraphs [0005]-[0479] | 6, 18, 20-22 |
| X | CN 115136501 A (MEDIATEK SINGAPORE PTE. LTD.) 30 September 2022 (2022-09-30)<br>description, paragraphs [0008]-[0145] | 6, 18, 20-22 |
| X | US 2022173799 A1 (NOKIA TECHNOLOGIES OY) 02 June 2022 (2022-06-02)<br>description, paragraphs [0006]-[0178] | 6, 18, 20-22 |
| A | WO 2023113681 A1 (TELEFONAKTIEBOLAGET LM ERICSSON (PUBL)) 22 June 2023 (2023-06-22)<br>entire document | 1-22 |
| A | WO 2023168143 A1 (QUALCOMM INC.) 07 September 2023 (2023-09-07)<br>entire document | 1-22 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 November 2024** | **16 November 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2024/114055** |

| Patent document cited in search report | | | Publication date (day/month/year) | Patent family member(s) | | | Publication date (day/month/year) |
|---|---|---|---|---|---|---|---|
| CN | 115581127 | A | 06 January 2023 | None | | | |
| CN | 111615186 | A | 01 September 2020 | None | | | |
| CN | 115136501 | A | 30 September 2022 | None | | | |
| US | 2022173799 | A1 | 02 June 2022 | US | 12088400 | B2 | 10 September 2024 |
| WO | 2023113681 | A1 | 22 June 2023 | None | | | |
| WO | 2023168143 | A1 | 07 September 2023 | None | | | |

Form PCT/ISA/210 (patent family annex) (July 2022)

**REFERENCES CITED IN THE DESCRIPTION**

**Patent documents cited in the description**

• CN 202311283570